# EUROPEAN PATENT SPECIFICATION

(11) **EP 1 552 385 B1**
(45) Date of publication and mention of the grant of the patent: **15.10.2008**
(21) Application number: 03734511.3
(22) Date of filing: 12.06.2003
(51) Int. Cl.: G06F 9/44

(54) **PROVIDING DYNAMIC MODEL-CODE ASSOCIATIVITY**
BEREITSTELLUNG EINER DYNAMISCHEN MODELLCODEASSOZIATIVITÄT
PRESENTATION D'UNE ASSOCIATIVITE DYNAMIQUE DE CODES TYPES

(30) Priority: 12.06.2002 US 387581 P
(43) Date of publication of application: 13.07.2005
(73) Proprietor: Telelogic North America Inc., Andover, MA 01810 (US)
(72) Inventor: ORTAL, Amos, Andover, MA 01810 (US); SHALEV, Avraham, Andover, MA 01810 (US)
(74) Representative: Hofmann, Harald
(86) International application number: PCT/US2003/018217
(87) International publication number: WO 2003/107180

(56) References cited:
- WO-A-01/25911
- WO-A-01/82072
- US-A1- 2002 023 261
- US-A1- 2002 147 763
- US-B1- 6 212 672
- BURNETT M M ET AL: "CONCEPTS AND ENVIRONMENTS" VISUAL OBJECT-ORIENTED PROGRAMMING: CONCEPTS AND ENVIRONMENTS, 1994, pages I-XIV,1-190, XP002935371
- 'I-Logix, Inc. - Rhapsody Overview', [Online] 23 August 2000, XP002972804 Retrieved from the Internet: <URL:http://web.archive.org/web/20008230328 25/www.ilogix.com/RFaminc_C.htm> [retrieved on 2003-09-16]

## Description

### Related Application

This application claims priority to U.S. Provisional Application Ser. No. 60/387,581 filed June 12, 2002, which is incorporated herein by reference.

### Field of the Invention

Embodiments of the present invention generally relates to software engineering and, more particularly, to a system, method and medium for synchronizing or substantially synchronizing software code with a model view of the software code and/or synchronizing or substantially synchronizing a model view of the software code with software code.

### Background of the Invention

Known conventional software development tools typically achieve model-code associativity by embedding annotations (e.g., comments) into the code and relating to the code as part of the model's repository. Although this method generally ensures consistency between the model and the code, it lacks the ability to use complex implementation schemes, such as generating accessors and/or mutators for Unified Modeling Language (UML^{™}) relationships between classes. UML^{™} is a specification developed by the Object Management Group^{™} (Needham, MA).

As known, the UML^{™} utilizes various graphical elements that are combined into diagrams whose purpose is to provide multiple views for expressing the constructs and relationships of systems. The multiple views constitute a model, which describes what the system is supposed to do. The model does not indicate how the system is to be implemented.

A UML^{™} model can include nine diagrams, as follows: a class diagram, an object diagram, a use case diagram, a state diagram, a sequence diagram, an activity diagram, a collaboration diagram, a component diagram, and a deployment diagram. Not all diagrams may be required for every UML^{™} model. In addition, other UML^{™} diagrams can be derived from the basic nine diagrams (e.g., two or more diagrams, or portions thereof, can be combined to provide another diagram).

One reason for the inability of conventional systems to use complex implementation schemes lies in the fact that a single block of code cannot implement all types of UML^{™} model elements (e.g., a state machine), or generate, for example, accessors and/or mutators for UML^{™} relationships between classes. Some tools can mitigate certain limitations by automating the process of populating the model with simple constructs (e.g., attributes, operations) by, for example, adding a getter and setter to an attribute by invoking a macro on a class.

We have determined, however, that these work-around technique result in other limitations or shortcomings. In particular, these techniques do not generally or adequately maintain the context of the additional constructs. For example, getter and setter signatures may not be updated when an attribute name is changed, which results in decreased associativity between the code and the associated model, and/or vice-versa.

FIG. 1 is as an overview of a related art software development tool as disclosed in publication U.S. 2002/0108101, which in incorporated herein by reference. As depicted in FIG. 1, source code 102 is being displayed in both a graphical form 104 and a textual form 106. The software development tool generates a transient meta model (TMM) 100 which stores a language-neutral representation of the source code 102. The graphical 104 and textual 106 representations of the source code 102 are generated from the language-neutral representation in the TMM 100. Alternatively, the textual view 106 of the source code may be obtained directly from the source code file. Although modifications made on the displays 104 and 106 may appear to modify the displays 104 and 106, in actuality all modifications are made directly to the source code 102 via an incremental code editor (ICE) 108, and the TMM 100 is used to generate the modifications in both the graphical 104 and the textual 106 views from the modifications to the source code 102. Fig. 1 also represents a software development tool as disclosed in the PCT application No. WO 01/25911 A1 from Togethersoft Corporation, The software development tool allows a simultaneous view of a graphical and textual display of source code, i.e. a graphical and a textual representation of the source code. In other words, graphical and textual views are synchronized. A modification in one view (graphical display/textual display) is automatically displayed in the other view (textual display/graphical display) and vice versa. Both the graphical and textual representation of the source code are generated from a transient meta model (TMM) which stores the source code in a language neutral representation. All modifications are made directly to the source code via an incremental code editor. The transient meta model is used to generate required modifications in both the graphical and the textual representation from the modifications to the source code. The software development tool further includes a quality insurance (QA) module. The QA module monitors the modifications to the source code. An error message is provided if the QA module determines that the source code does not conform to predefined or user-defined styles.

A further software development tool is disclosed in the PCT application No. WO 01/82072 A1, from Togethersoft Corporation. The software development tool discloses features as disclosed in the PCT application No. WO 01/25911 A1. Further, the software development tool provides an improved software development process by receiving an indication to create a link, receiving an indication of a first one of elements and a second one of elements and adding new code to the first element to reflect the link to the second element Each element has corresponding code and the linked elements include a source and a destination. The link can identify an inheritance relationship. The link results in a source element (first one of elements - the source of the link) inheriting all the attributes and methods of the destination element (second one of elements - the destination of the link).

A further software development tool is disclosed in the PCT application No. WO 01/82701 A1 from Togethersoft Corporation. The software development tool contains functionalities and features which are also known from the two previous mentioned PCT applications No. WO 01/25911 A1 and WO 01/25911 A1. The generated code corresponds to a distributed computing component (e.g. Enterprise Java Bean^{™}) that contains methods of a plurality of types and that displays a graphical representation of the source code with a separately delineated display area for each type. Further, the document discloses a correcting of non-compliant source code on the basis of an external specification (e.g. Enterprise Java Beans^{™}) and a refactoring of the code corresponding to this external specification.

The prior art software development tools provide simultaneous round-trip engineering, i.e., the graphical representation (e.g. U.S. 2002/0108101: Reference Numeral 104) is synchronized with the textual representation (e.g. U.S. 2002/0108101: Reference Numeral 106). Thus, if a change is made to the source code (e.g. U.S. 2002/0108101: Reference Numeral 102) via the graphical representation (e.g. U.S. 2002/0108101: Reference Numeral 104), the textual representation (e.g. U.S. 2002/0108101: Reference Numeral 106) is updated automatically. Similarly, if a change is made to the source code (e.g. U.S. 2002/0108101: Reference Numeral 102) via the textual representation (e.g. U.S. 2002/0108101: Reference Numeral 106), the graphical representation (e.g. U.S. 2002/0108101: Reference Numeral 204) is updated to remain synchronized.

However, none of the prior art documents do teach or suggest the code and model update procedures described herein, which achieve model-code associativity by using, for example, a mode based approach. In addition, rather than achieving model-code associativity by integrating the code as part of a repository and providing the design context by using, for example, annotations in the code as is done conventionally, one or more embodiments of the present invention provide a system, method and medium that achieves model-code associativity by using code change and/or model change detection and management.

None of the above cited prior art documents provide a software development tool that synchronizes a software source code with a modified model that represents the software source code such that the source code is further internally consistent.

It is an object of the present invention to ensure that the software source code associated with the elements of the model is executable after modifications are made to the elements of the model and/or a portion of the software source code.

### Summary of the Invention

This object is solved by a method according to claim 1 and a data processing system according to claim 10.

In accordance with one or more embodiments of the present invention, dynamic model-code associativity provides an automatic synchronization mechanism between, for example, Rhapsody's Unified Modeling Language (UML^{™}) models and their implementation code, allowing instantaneous view of up-to-date implementation code, as well as immediate update of the model if the code is manually changed.

In at least one embodiment of the present invention, a standard browser and screen displays can be used. For example, on the right side of the screen, hand side the user can view a UML^{™} sequence diagram, and one the upper left side of the display the active code view can be displayed. As used herein, active code view is the area of a display that can be used to display code that corresponds to a selected model element. If the user selects, for examples, a method (e.g., setup()), the active code view can automatically update (if necessary), and display the implementation of the method setup(). Conversely, if the user changes the name of the method setup () in the sequence diagram to, for example, mySetup(), the sequence diagram (as well as the rest of the model) automatically reflect the change.

Dynamic model-code associativity is one of the enabling features of the Rhapsody^{®} (I-Logix Inc., Andover, MA) model-based approach. Chapter 15 of the Rhapsody® User Guide, Release 4.2, pages 15-1 - 15-53, 2003, is attached hereto as Appendix A. In this approach, the model constitutes a complete or substantially complete specification of the system from which the tool generates a series of work products such as implementation source code, various types of documents, tests scripts, UI front ends, as well as interact with external tools for various purposes such as timing analysis, test driving, etc. In addition, model based tools are characterized by elaborate implementation schemes that aim to implement as much as possible from the UML^{™} specifications, including behavioral diagrams such as statechart/activity diagrams. This minimizes (or eliminates) inconsistencies between the UML^{™} specification and its implementation, as well as greatly increases productivity and quality of the product.

To enable end-users gain maximum benefit from the advantages offered by the programming language and the supporting technological platforms, a high or substantial degree of synergy between the model and the code is required. To provide this, the implementation language augments the modeling language, i.e. the model contains code fragments as part of its specification. In addition, the user must have a high degree of control over the generated code so it would meet its production quality requirements. Another key enabler of this synergistic approach is the ability to round-trip changes that a user has made directly to the generated code, so that user-changes to the generated code become an integral part of the model. This ensures that manual coding changes are not lost when code is regenerated. Since DMCA provides the user with the ability to immediately view and directly control the implementation of the system by utilizing standard code generation and round trip capabilities, it is one of the key facilitators for the advantages in the above approach.

Current tools achieve model-code associativity by embedding annotations into the code and relating to the code as part of the model's repository. Although this method ensures consistency between the model and the code, it lacks the ability to use complex implementation schemes. The reason for this limitation lies in the fact that we have determined, that a single block of code cannot implement all types of UML^{™} model elements, for example a statemachine or generating accessors and mutators for UML^{™} relationships between classes. Some of these tools workaround these limitations by providing automatic ways to populate the model with simple constructs (attributes, operations, etc.), for example, adding a getter and setter to an attribute by invoking a macro on the class. We have determined, however, that this results in another limitation, since usually the context of the additional constructs is not maintained: for example, a change in the attribute name will not affect the getters and setters signatures.

As we will show, our dynamic model-code associativity approach of at least one embodiment of the present invention overcomes the current art's limitation by taking a different approach: we detect changes in the model or in the code and automatically or substantially automatically make the necessary updates. This enables us to maintain and enhance our model-based approach, keeping the model separate from its implementation while maintaining a high degree of synergy between the two. In alternative implementations, the model is automatically updated based on predetermined activities and/or time intervals regardless of the types of changes requiring updating.

As described herein, the dynamic model-code associativity in accordance with at least one embodiment of the present invention updates the displayed code in case a relevant model element changes, and conversely, if the code changes, DMCA updates the model.

A high-level architecture that can implement the dynamic model-code associativity in accordance with at least one embodiment of the present invention can include a DMCAManager that is responsible for finding relevant changes in the model's repository or in the generated files, and that can invoke the proper tool for the required update. Three tools are can be utilized: A code generator for generating implementation code for model elements, a RoundTrip element that can update the repository according to the code, and an element location finder that can find where an implementation of a certain model element resides in the code so the active code view will show a relevant code fragment.

In one embodiment of the invention, there can be two relevant views for the code: code view and active code view. Both views enable text file editing, and both can send notifications to the DMCAManager that, in turn, checks if the code and the model are synchronized (see below). The active code view is a specialization of the code view. Code view allows a user to edit code for classes and/or a selected package. Thus, using code view, a user can select, for example, one or more classes, and utilize a text editor to edit the code file(s). Active code view reflects the implementation of the currently selected model element, e.g. if the user selects an element in one of the UML^{™} views (not shown in the figure) its implementation is immediately shown in the active code view window. Since a single file may contain several elements implementations, the element location finder can direct the active code view to scroll to the correct line in the code so the implementation of the selected element will be visible. Additional or fewer views may alternatively be used and/or combined. For example, the Code View and Active code view may optionally be combined into an additional view or an alternative embodiment.

The repository generally consists of model elements. One type of model element can be a standard Rhapsody component (I-Logix Inc., Andover, MA), which can hold implementation information, such as mappings between model elements and their implementation files, the type of binary file that is produced (executable, static library, DLL, etc.), makefile information, etc. Throughout a modeling session, in a preferred embodiment there is exactly one "active" component signifying the current implementation context for the code generator, the round trip tool, the DMCAManager and optionally other Rhapsody tools. In one or more alternative embodiments, the number of active components can be more than one.

It is preferred that the dynamic model-code associativity does not perform code generation unnecessarily. This can be achieved by using an IMCA (Incremental Model Code Associativity) subsystem, which can be used to determine if a model element needs to be regenerated. The IMCA is mentioned here for completeness, its structure and functionality are irrelevant for DMCA since other alternative mechanisms can be used to detect changes in model elements.

The DMCAManager can use the following algorithm to update the generated files as a result of model element change:
1. DMCAManager gets a notification that a file may need to be generated. This can be invoked by:
   1.1. The code view - when it gains focus or opens up.
   1.2. The active code view - a new selection of a model element is intercepted by the active code view, which in turn notifies the DMCAManager.
2. DMCAManager queries the active component for all the elements implemented in the file. The component holds the mapping between implementation files and model elements.
3. DMCAManager uses the IMCA to determine if any of the elements implemented in the file have been modified.
4. If there is a modified element, the DMCAManager instructs the code generator to regenerate the file.
5. If the file was regenerated, the DMCAManager notifies the code view to update itself. In case of an active code view, the active code view queries the location finder for the line numbers of the element in the code and scrolls to the proper lines (in C and C++ the active code displays header and .c\.cpp files and that is why more than single line may be involved).

The DMCAManager can use the following algorithm to roundtrip code change into the model:
1. DMCAManager may accept a notification from a code view if the view loses focus or the user saves its contents after modification. If the view loses focus and the view's content is modified, the code view saves the file and then notifies the DMCAManager.
2. If the content of the file was changed, repository update (RoundTrip) is invoked for the file and the relevant elements are updated.
3. Since the code generation mapping may be complex (for example, attributes with getters and setters) the DMCAManager invokes code generation for the modified elements so the code will comply with the code generation rules (in our example, change of the data member's name that is implementing the attribute will cause the names of the getters and setters to change as well).

In addition, alternative embodiments of the invention include one or more of the following:
a. The DMCAManager may optionally get a notification that a file may need to be generated from modules other than the code view or the active code view.
b. The DMCAManager may optionally use any type of mechanism to decide if a model element needs to be regenerated or optionally always regenerate the file.
c. The DMCAManager may optionally query the active component for a pointer or reference where all or substantially all the elements implemented in the file are stored.
d. The active component optionally stores an index or reference to where the mapping between implementation files and model elements is stored.
e. The DMCAManager may optionally save the file even when the view loses focus and the view's content is modified.
f. Instead of making a determination whether the content of the file was changed, repository update is optionally automatically invoked for the file and the relevant elements, if any, are updated.
g. The DMCAManager optionally invokes code generation for the all or substantially all the elements (primarily to update the modified elements) so the code will comply with the code generation rules.

Other alternatives to the above are considered within the scope of the present invention. For example, the specific sequence described above can be modified as appropriate so long as the overall DCMA functionality is performed as described herein.

In addition, examples of how one or more embodiments of the present invention can be used are as follows:
1. A user adds an attribute to a class and sets focus on the class's code view:
   a. User selects a class in the model and adds an attribute to it.
   b. User sets a focus on a code view displaying the code of this class.
   c. The code editor of the code view notifies the DMCAManager that it was selected.
   d. DMCAManager determines that the model element of the class was changed after the code was generated for the class, and therefore the file should be regenerated.
   e. DMCAManager invokes the code generator instructing it to regenerate the file.
   f. DMCAManager sends an update message to the code view, which in turn makes the code view reload the file.
2. A user renames a class and sets the focus to a view of a class that has a relation to the modified class:
   a. A user selects the class in the model and renames it.
   b. The user sets a focus on a code view displaying the code of the dependent class.
   c. The code editor of the code view notifies the DMCAManager that it was selected.
   d. The DMCAManager finds that a strong change on a directly associated element has occurred and therefore the file needs to be regenerated.
   e. The DMCAManager invokes the code generator instructing it to regenerate the file.
   f. DMCAManager sends an update message to the code view, which in turn makes the code view reload the file.
3. A user selects a model element while active code view is shown
   a. The user selects a model element.
   b. Active code view is notified of the selection.
   c. Active code view loads the file (assuming it already exists).
   d. Active code view notifies DMCAManager that the file may need to be regenerated.
   e. DMCAManager determines if the file needs to be regenerated and acts accordingly.
4. A user opens a code view of a class:
   a. The user selects a class and selects "Edit Class".
   b. If the file does not exist it is generated. If the file exists, the code view notifies the DMCAManager that it was opened.
   c. The DMCAManager finds out if the file needs to be regenerated and instructs the code generation accordingly and if needed, makes the view reload the file.
5. A user changes a name of a class in, for example, the code or a nested class of the code, and leaves the code view:
   a. Code view saves the file and notifies the DMCAManager that the file was saved.
   b. The DMCAManager invokes RoundTrip to roundtrip the file.
   c. RoundTrip detects that the name of the class is different from the name specified in the model and changes the name of class in the model.
   d. The repository updates the dependent elements as if the user renamed the class manually.
   e. Code generator is invoked re-synchronizing the code with the model. For example the constructors and destructors are renamed properly.

Thus, the present invention advantageously, in at least one embodiment, maintains a software model, separate from its code implementation, while maintaining associativity between the two. With the system, method and medium of dynamic model-code associativity (DMCA) in accordance with at least one embodiment of the present invention, the model constitutes a complete or substantially complete specification of the system from which a code generator can generate, for example: implementation source code, various types of documents, test scripts, user interface front ends and/or can interact with external tools for various purposes such as timing analysis and/or test driving. In addition, at least one embodiment of the present invention can utilize the Unified Modeling Language (UML^{™}), which provides a high or substantial degree of synergy between the UML^{™} model and the code. In addition, the implementation language (e.g., C++, Java) can augment the modeling language. For example, in an embodiment, the model can contain code fragments as part of its specification.

An embodiment of the present invention advantageously provides a user with a high degree of control over the generated code so it can meet, for example, production quality requirements. For example, at least one embodiment of the present invention can also round-trip changes, made directly to the generated code, into the model so that these changes to the code become an integral part of the model. This advantageously ensures that the model is updated, responsive to, for example, regeneration of code. One or more embodiments of the present invention can thus provide a user with the ability to quickly view and directly control and/or edit the implementation of the system by utilizing standard code generation and round trip capabilities.

One or more embodiments of the present invention can thus be utilized to detect changes in (or to) a software model and/or software code, and automatically or substantially automatically update the model and/or code. In alternative implementations, the software model can be automatically updated based, for example, on predetermined activities and/or time intervals, optionally independent of the types of changes requiring updating.

At least one embodiment of the present invention thus achieves model-code associativity using, for example, a mode based approach, and provides a system, method and medium that achieves model-code associativity by using code change and/or model change detection and management.

The present invention can also advantageously enable model-code associativity for complex code generation and round trip schemes. The present invention can thus enable a user to advantageously utilize the strength of model-based development (e.g., utilizing UML^{™}) , in combination with a substantial degree of visibility and control over the implementation code.

In accordance with an embodiment of the invention, a computer implemented method for associating source code with a plurality of elements of a model representing the source code is provided. The method can include the steps of generating a plurality of elements of a model implementable as software source code, generating the software source code corresponding to the plurality of elements of the model, associating portions of the software source code with at least one of the plurality of elements of the model, determining that at least one of the plurality of elements has been modified, and modifying the source code to correspond to at least one or more of the plurality of elements that has been modified.

The method can also optionally include the step of displaying at least a portion of the source code that has been modified. At least a portion of the model elements can be displayed in a first display region of a browser, and at least a portion of the modified source code can be displayed in a second display region of the browser. The first and second display regions can optionally be conventional browser frames.

In addition, particular line numbers of the source code can be associated with the model elements, such as unified modeling language (UML^{™}) model elements. The UML^{™} elements can be at least one of a class diagram, an object diagram, a use case diagram, a state diagram, a sequence diagram, an activity diagram, a collaboration diagram, a component diagram, and/or a deployment diagram.

Another method in accordance with an embodiment of the present invention can associate source code with a plurality of elements of a model representing the source code. The method can include the steps of generating a plurality of elements of a model implementable as software source code, generating the software source code corresponding to the plurality of elements of the model, associating portions of the software source code with at least one of the plurality of elements of the model, determining that at least a portion of the source code has been modified, modifying at least one of the plurality of model elements to correspond to the modified software source code, and regenerating the software source code in accordance with predetermined rules so that the software source code conforms to the modified model.

The method according can also include the steps of displaying at least a portion of the software source code that has been modified and/or displaying at least one of the plurality of elements of the model that has been modified.

At least one of the plurality of model elements can be displayed in a first display region of a browser, and at least a portion of the modified software source code can be displayed in a second display region of the browser. The first and second display regions can be conventional web browser frames.

In addition, particular line numbers of the software source code can be associated with at least one of the plurality of model elements. The model elements can be unified modeling language (UML^{™}) model elements that include a class diagram, an object diagram, a use case diagram, a state diagram, a sequence diagram, an activity diagram, a collaboration diagram, a component diagram, and/or a deployment diagram.

A computer program product residing on a computer readable medium in accordance with the present invention can include instructions that cause a computer to generate a plurality of elements of a model implementable as software source code, generate software source code corresponding to the plurality of elements of the model, associate portions of the software source code with at least one of the plurality of elements of the model, determine that at least one of the plurality of elements of the model has been modified, and modify the source code to correspond to the one or more modified model elements. The medium can also include instructions for causing the computer to display at least a portion of the source code that has been modified.

Another computer program product in accordance with the present invention can include instructions for causing a computer to generate a plurality of elements of a model implementable as software source code, generate software source code corresponding to the plurality of elements of the model, associate portions of the software source code at least one of the plurality of elements of the model, determine that at least a portion of the software source code has been modified, modify the at least one of the plurality of model elements to correspond to the modified source code, and regenerate the software source code in accordance with predetermined rules so that the source code conforms to the modified model. In addition, the computer program product can also include instructions for causing a computer to display at least a portion of the source code that has been modified.

A data processing system for generating documentation for source code in a software project in accordance with the present invention can include means for generating a plurality of elements of a model implementable as software source code, means for generating software source code corresponding to the plurality of elements of the model, means for associating portions of the software source code with at least one of the plurality of elements of the model, means for determining that at least one of the plurality of elements of the model has been modified, and means for modifying the software source code to correspond to one or more of the modified model elements. In addition, the data processing system can also include means for displaying at least a portion of the source code that has been modified.

A computer implemented method for associating source code with a plurality of elements of a model representing the source code in accordance with at least one embodiment of the present invention can include the steps of generating a plurality of elements of a model implementable as software source code, generating software source code corresponding to the plurality of elements of the model, associating portions of the software source code with at least one of the plurality of elements of the model, determining that at least a portion of the software source code has been modified, modifying the at least one of the plurality of model elements to correspond to the modified software source code, and regenerating the software source code in accordance with predetermined rules so that the source code conforms to the modified model. The computer implemented method can also include the step of displaying at least a portion of the source code that has been modified.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

Further, the purpose of the foregoing abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The abstract is neither intended to define the invention of the application, which is measured by the claims, nor is it intended to be limiting as to the scope of the invention in any way.

The various features of novelty which characterize the invention are pointed out with particularity in the claims annexed to and forming a part of this disclosure. For a better understanding of the invention, its operating advantages and the specific objects attained by its uses, reference should be made to the accompanying drawings and descriptive matter in which there is illustrated preferred embodiments of the invention.

### Notations And Nomenclature

The detailed descriptions which follow may be presented in terms of program procedures executed on computing or processing systems such as, for example, a stand-alone computing machine, a computer or network of computers. These procedural descriptions and representations are the means used by those skilled in the art to most effectively convey the substance of their work to others skilled in the art.

A procedure is here, and generally, conceived to be a sequence of steps leading to a desired result. These steps are those that may require physical manipulations of physical quantities (e.g., combining various pharmaceutical products into packages). Usually, though not necessarily, these quantities take the form of electrical, optical or magnetic signals capable of being stored, transferred, combined, compared and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operations described herein which form part of the present invention; the operations are machine operations. Useful machines for performing the operation of the present invention include general purpose digital computers or similar devices, including, but not limited to, microprocessors.

### Brief Description of the Drawings

The detailed description of the present application showing various distinctive features may be best understood when the detailed description is read in reference to the appended drawing in which:

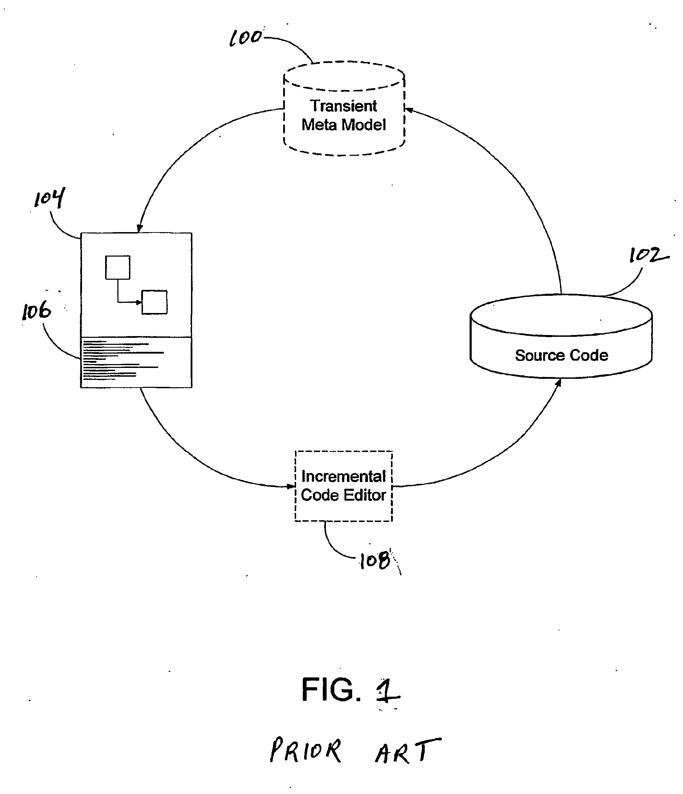

FIG. 1 is as an overview of a related art development tool;
FIG. 2 is an exemplary screen display showing a model view and active code view;
FIG. 3 is an exemplary screen display demonstrating how the model can be updated based on a change in code;
FIG. 4 is an exemplary high-level overview of an architecture of an embodiment of the present invention;
FIG. 5 is an exemplary flow diagram showing how a code-file can be updated based on a change to the associated model;
FIG. 6 is an exemplary flow diagram showing how a model can be updated based on a change to the associated code-file;
FIG. 7 shows a block diagram of a computer that can be used to implement the dynamic model-code associativity in accordance with the present invention; and
FIG. 8 illustrates a block diagram of the internal hardware of the computer of FIG. 7.

### Detailed Description of the Invention

Reference now will be made in detail to the presently preferred embodiments of the invention. Such embodiments are provided by way of explanation of the invention, which is not intended to be limited thereto. In fact, those of ordinary skill in the art may appreciate upon reading the present specification and viewing the present drawings that various modifications and variations can be made.

For example, features illustrated or described as part of one embodiment can be used on other embodiments to yield a still further embodiment. Additionally, certain features may be interchanged with similar devices or features not mentioned yet which perform the same or similar functions. It is therefore intended that such modifications and variations are included within the totality of the present invention.

In accordance with a preferred embodiment, the system, method and medium of dynamic model-code associativity in accordance with the present invention provides synchronization between a model of source code and the source code itself. In at least one embodiment, the present invention thus advantageously provides or facilitates substantially instantaneous viewing of up-to-date implementation code and/or one or more associated models.

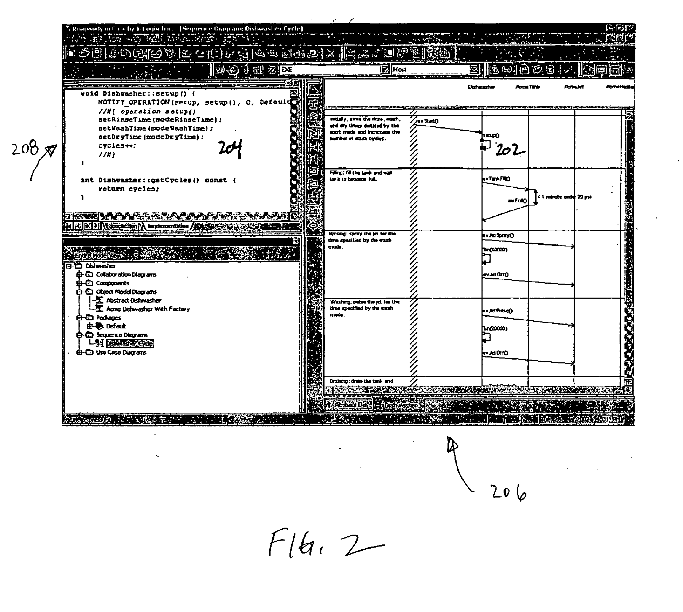

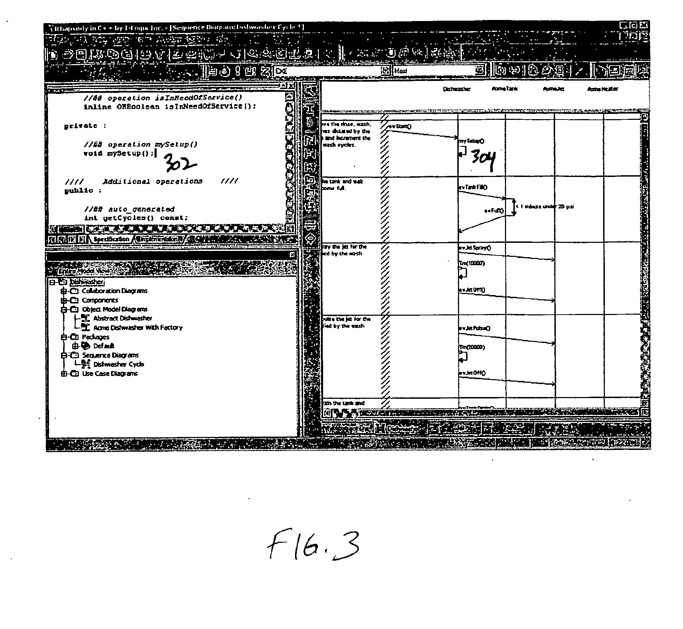

FIGs. 2 and 3 demonstrate the dynamic model-code associativity in accordance with one embodiment of the invention. As shown at 206, a browser or other standard display means can display a Unified Modeling Language (UML^{™}) sequence diagram. It should also be understood that the present invention can also utilize and display UML^{™} diagrams such as class diagrams, object diagrams, use case diagrams, state diagrams, activity diagrams, collaboration diagrams, component diagrams, and/or deployment diagrams, and/or variations and/or combinations thereof. The user interface (e.g., a browser) that can be used in connection with the present invention can enable a user to create, edit and/or deleted any UML^{™} diagrams described above. At 208, an active code view is shown. As used herein, active code view 208 is the area of a display that can be used to display code that corresponds to a selected model element. If a user selects the method setup() 202, the active code view 208 can automatically update (as necessary), and display the implementation of the method setup() 204.

In addition, and referring now to FIG. 3, if the user changes the name of the method setup() to mySetup() 302, the sequence diagram (and preferably any other views of the model, as discussed above) is automatically updated to reflect the change. Thus, at 304, mySetup() is displayed.

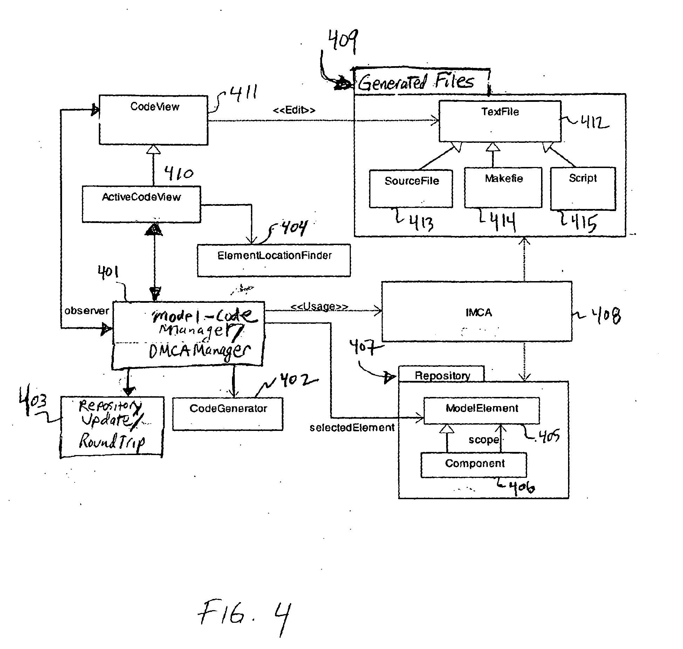

FIG. 4 shows an exemplary high-level architecture of an embodiment of the present invention. Model-code manager 401 locates or determines relevant changes in model repository 407 and/or in code generator 409. Upon determining changes to the model and/or file, model-code manager 401 can invoke one or more of, for example, three tools to accomplish the required update. In particular, model-code manager 401 can invoke code generator 402 to, for example, generate implementation code corresponding to the elements stored by and/or associated with for model element 405. Model-code manager 401 can also optionally invoke code generator 402 for all or substantially all elements (primarily to update the modified elements) stored or associated with model element 405, so the code in file 412, 413, 414, 415 will comply with the code generation rules.

Model-code manager 401 can also optionally invoke repository update 403 to, for example, update repository 407 to conform with the code. Model-code manager 401 can also optionally invoke element finder 404 to, for example, determine where an implementation of a certain model element stored by and/or associated with model element 405 is located in the code. Once the model element is located, active code view 410 can be invoked to display a relevant code fragment (such as shown at FIG. 2, 208).

Code view 411 can be used to display particular implementation files 412, which can include existing source code files 413, make file 414 (e.g., one or more newly created source code files) and/or script files 415.

Both active code view 410 and code view 411 enable text file 412 editing (e.g., editing of source file 413, makefile 414 and/or script file 415), and send notifications to model-code manager 401. Active code view 410 can be a particular implementation of code view 411. In an embodiment of the present invention, model-code manager 401 may optionally receive a notification that a file 412, 413, 414, 415 may need to be generated from modules other than code view 411 or active code view 410. Code view 411 and active code view 412 may optionally be combined into an additional view or an alternative embodiment.

Active code view 410 reflects the implementation of the currently selected model element 405. For example, if a user selects an element in one of the UML^{™} views (e.g., mySetup 304 shown in FIG. 3), its implementation can be displayed, for example, in active code view window 208. Since a single file may contain an implementation of one or more elements, element location finder 404 can be used to direct active code view 410 to, for example, scroll to the correct line in the code so the implementation of the selected element can be displayed, for example, in active code view window 208.

An embodiment of repository 407 can include model elements 405. One type of model element 405 can be a standard Rhapsody component (I-Logix Inc., Andover MA), which can hold implementation information such as mappings between model elements 405 and their corresponding implementation file(s), the type of binary file that is produced (executable, static library, dynamic link library, etc.), makefile 414 information, etc. Throughout a modeling session, in one embodiment of the present invention there is one "active" component signifying the current implementation context for code generator 402, repository update 403, model-code manager 401, and optionally other tools. In an alternative embodiment, the number of active components can be more than one.

In one embodiment, model-code manager 401 can communicate with or access IMCA (Incremental Model Code Associativity) 408 to determine if there have been changes in or to an element stored by or associated with model element 405 since, for example, the last update. If there have been changes in an element stored by or associated with model element 405, model-code manager 401 can invoke repository update 403 to update or create the file(s) 412. In an embodiment of the invention, instead of making a determination whether the content of file 412, 413, 414, 415 was changed, repository update 403 is optionally automatically invoked for the file 412, 413, 414, 415 and the relevant (or associated) elements, if any, stored or associated with model element 405, are updated.

Model-code manager 401 may optionally use any type of mechanism to determine whether an element stored by or associated with model element 405 needs to or should be regenerated, or optionally always regenerates model element 405. In addition, model-code manager 401 may optionally query component 406 for, e.g., a pointer or reference indicating where particular, all or substantially all elements implemented in model element 405 are stored. In addition, component 406 can optionally store, for example, an index or reference indicating a mapping between files 412, 413, 414, 415 and elements stored by or associated with model element 405.

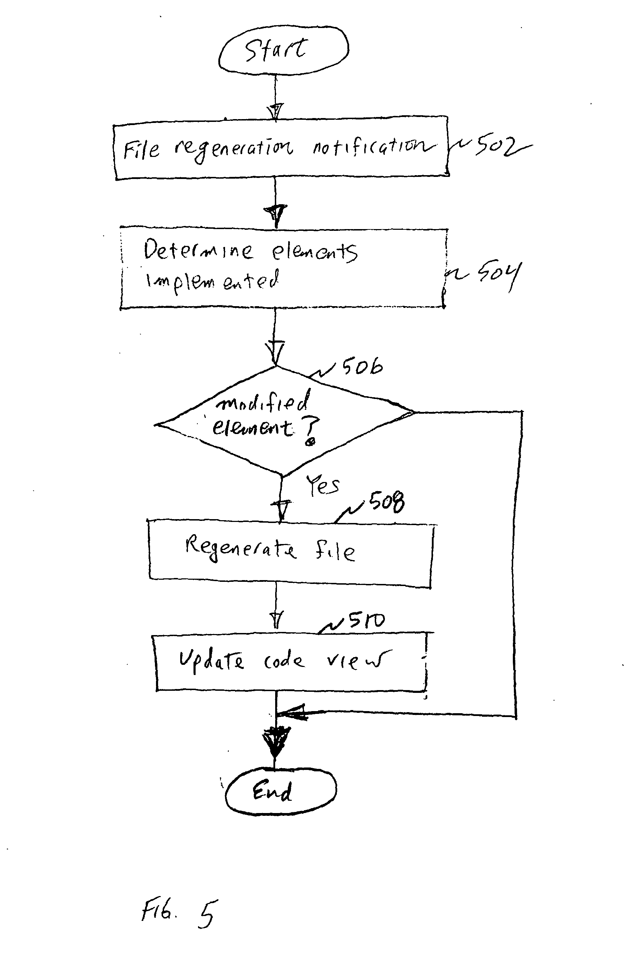

FIG. 5 is an exemplary flow diagram of a code-file update procedure related to a change to one or more model elements stored by or associated with model element 405. At step 502, model-code manager 401 can receive a notification that a file 412, 413, 414, 415 may need to be updated or generated. Model-code manager 401 can be notified by code view 411 when, for example, code view 411 gains focus (e.g., opens a file). In addition, model-code manager 401 can be notified when active code view 410 detects, for example, a new selection of model element 405.

At step 504, model-code manager 401 can query component 406 for elements implemented in a particular file 412, 413, 414, 415. Component 406 maintains or stores the mapping between files 412, 413, 414, 415 and associated or corresponding model element stored by or associated with model element 405.

At decision step 506, model-code manager 401 can invoke or access IMCA 408 to determine if any of the elements implemented in file 412, 413, 414, 415 have been modified. If no elements have been modified, the process ends. If there is a modified element, code generator 402 can be used at step 508 to regenerate file(s) 412, 413, 414, 415. In an embodiment, model-code manager 401 can instruct or cause code generator 402 to generate code. In addition, model-code manager 401 can notify, cause or instruct code view 411 to update itself. In case of active code view 410, active code view 410 can query element location finder 404 for, e.g., the line number(s) of a particular element in the code, and scroll to the proper line(s), as shown at 208 in FIG. 2.

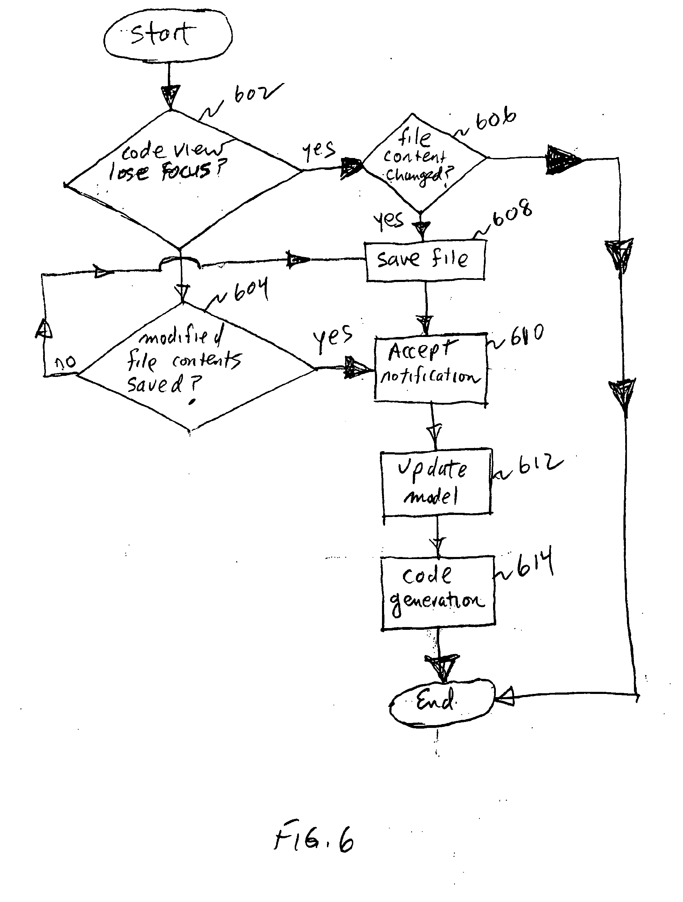

FIG. 6 is an exemplary flow diagram of a model update procedure related to a change to a file 412, 413, 414, 415. In an embodiment of the present invention, model-code manager 401 can use the following exemplary algorithm to update the model elements maintained or stored by model element 405.

At decision step 602, a determination is made whether code view 411 loses focus (e.g., the file is closed, or editing capability of the file is otherwise lost) of a file 412, 413, 414, 415. If focus is lost, code view 411 at decision step 606 can determine whether the file 412, 413, 414, 415 contents have changed. If the file contents have changed, then the file is saved at step 608. At step 610, model-code manager 401 can accept a notification from, for example code view 411 that file 412, 413, 414, 415 contents have changed. At step 612, model element 405 is updated to correspond with the content of the code saved at step 608. At step 614, model-code manager 401 invokes code generator 402 to ensure that the code complies with the code generation rules. For example, in the Java language, code generator 402 can ensure that the names of getters and setters are changed in connection with other changes to the code. If at decision step 606 it is determined that the contents of file 412, 413, 414, 415 have not changed, the process ends.

If at decision step 602 it is determined that code view 411 has not lost focus, a determination is made at decision step 604 to determine if the file 412, 413, 414, 415 has been saved. If it is determined that the file has not been saved, the file is saved at step 608, and steps 610, 612 and 614 are carried out as previously described. If it is determined at decision step 602 that the file has been saved, steps 610, 612 and 614 are carried out as previously described.

The following are exemplary illustrations of usage of the present invention. First, suppose a user desires to add an attribute to a class and set focus on the class's code view. To do this, the user can select a class in the model stored by or associated with model element 405, and add, for example, an attribute to it. A user can set a focus on a code view, displaying the code of the class. The code editor of code view 411 can notify model-code manager 401 that it was selected. Then, using, for example, the method described with regard to FIG. 5, model-code manager 401 can determine whether one or more model elements, stored in or associated with model element 405, of the class were changed after code generator 402 generated code for the class, and whether the file 412, 413, 414, 415 should be regenerated. If a model element has been changed, model-code manager 401 can invoke code generator 402, instructing it to regenerate one or more files 412, 413, 414, 415 associated with the model. Model-code manager 401 can also send an update message to code view 411, which in turn causes code view 411 reload the file 412, 413, 414, 415.

As a second example, a user can rename, for example, a class and set the focus to a view of a class that has a relation to the modified class. In particular, a user can select a class in the model that may be stored or associated with model element 405, and rename the class. The user can set a focus on a code view 411 to display the code of a dependent class. A code editor that can be utilized in conjunction with code view 411 can notify model-code manager 401 that code view 411 has been selected. Using the method as shown and described in connection with, for example, FIG. 5, model-code manager 401 can determine that a strong change (e.g., an authorized change or a change that can affect other model elements or code objects) has occurred on a directly associated element, and that the file 412, 413, 414, 415 needs to be regenerated. Model-code manager 401 can invoke code generator 402, causing or instructing code generator 402 to regenerate file 412, 413, 414, 415. Model-code manager 401 can send an update message to code view 411, which in turn instructs or causes code view 411 to reload file 412, 413, 414, 415, which can then optionally be displayed.

As a third example, a user can select an element stored or associated with model element 405, while active code view 410 is shown, such as shown in FIG. 2, at active code view 208. In particular, when a user selects a model element, active code view 405 is notified of the selection, and can load or optionally create one or more files 412, 413, 414, 415. Active code view 410 can notify model-code manager 401 that the file(s) 412, 413, 414, 415 may need to be regenerated. Model-code manager 401 can determine if the file 412, 413, 414, 415 needs to be regenerated, and regenerates one or more files 412, 413, 414, 415, optionally in a manner such as described with regard to FIG. 5.

As a fourth example, a user can open a code view 411 of a class. In particular, a user can select a class for editing. If a file 412, 413, 414, 415 for the class does not exist, code generator 402 can generate a file 412, 413, 414, 415. If one or more files 412, 413, 414, 415 exist for the class, code view 411 can notify model-code manager 401 that the file 412, 413, 414, 415 has been opened. In accordance with, for example, the method described in FIG. 5, model-code manager 401 can determine if file 412, 413, 414, 415 needs to be regenerated, and instructs code generator 402 accordingly. Model-code manager 401 can also optionally cause code view 411 and/or active code view 410 to reload the file, and subsequently display the regenerated code.

As a fifth example, a user can change the name of a class in the code and exit code view 411. In particular, code view 411 can save the file 412, 413, 414, 415 and notify model-code manager 401 that the file 412, 413, 414, 415 has been modified and saved. Model-code manager 401 can invoke repository update 403, which can detect that the name of the class is different from the name specified in the model element 405, and cause the name of class to be changed in model element 405. Repository update 403 can be invoked after code generator 402 generates code, as well as after a user makes changes to generated code. Repository 407 can update any dependent elements, optionally as if the user manually renamed the class. Code generator 402 is invoked to re-synchronize the code in file 412, 413, 414, 415, with the model elements stored in or associated with model element 405. For example, in the Java programming language, constructors and finalizers can be properly renamed. In the C++ programming language, constructors and destructors can be properly renamed.

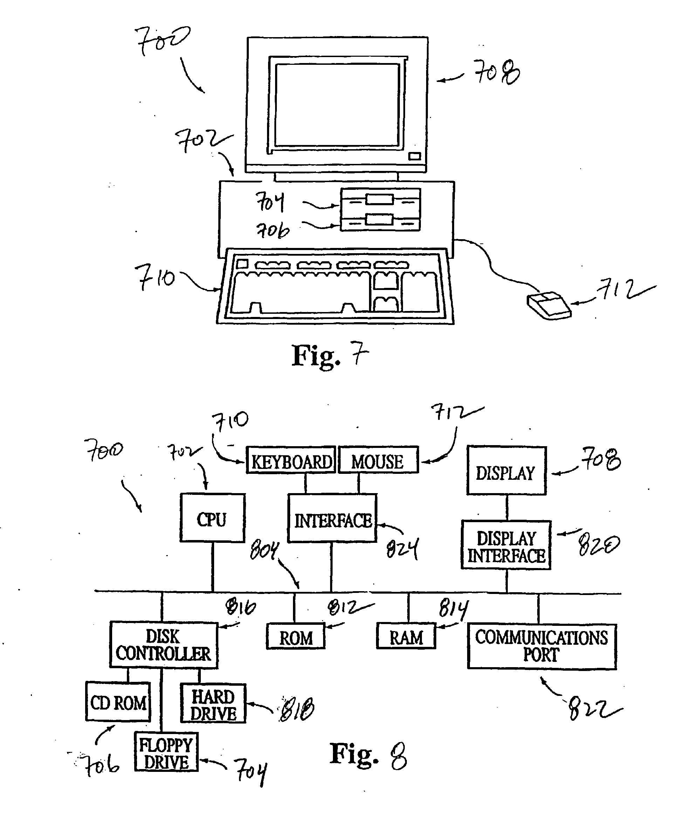

FIG. 7 is an illustration of a computer 700 used for implementing the computer processing in accordance with a computer-implemented embodiment of the present invention. The procedures described above may be presented in terms of program procedures executed on, for example, a computer or network of computers.

Viewed externally in FIG. 8, computer 700 has a central processing unit (CPU) 702 having disk drives 704, 706. Disk drives 704, 706 are merely symbolic of a number of disk drives that might be accommodated by computer 700. Typically, these might be one or more of the following: a floppy disk drive 704, or a CD ROM or digital video disk, as indicated by the slot at 706. The number and type of drives varies, typically with different computer configurations. Drives 704, 706 are, in fact, options, and for space considerations, may be omitted from the computer system used in conjunction with the processes described herein.

Computer 700 also has a display 708 upon which information may be displayed. The display is optional for the computer used in conjunction with the system described herein. A keyboard 710 and/or a pointing device 712, such as a mouse 712, touch pad control device, track ball device, or any other type of pointing device, may be provided as input devices to interface with central processing unit 702. To increase input efficiency, keyboard 710 may be supplemented or replaced with a scanner, card reader, or other data input device.

FIG. 8 illustrates a block diagram of the internal hardware of the computer of FIG. 7. Bus 804 serves as the main information highway interconnecting other components of the computer. It is connected by an interface 806 to the computer 700, which allows for data input through the keyboard 710 or pointing device, such as a mouse 712.

CPU 702 is the central processing unit of the system, performing calculations and logic operations required to execute a program. Read only memory (ROM) 812 and random access memory (RAM) 814 constitute the main memory of the computer.

Disk controller 816 interfaces one or more disk drives to the system bus 804. These disk drives may be floppy disk drives such as 704, or CD ROM or DVD (digital video/versatile disk) drives, as at 706, or internal or external hard drive(s) 818. As previously indicated these various disk drives and disk controllers are optional devices.

A display interface 820 permits information from bus 804 to be displayed on the display 708. Again, as indicated, the display 708 is an optional accessory, as would be, for example, an infrared receiver and transmitter (not shown). Communication with external devices can occur using communications port 822.

Conventional processing system architecture is more fully discussed in Computer Organization and Architecture, by William Stallings, MacMillan Publishing Co. (3d ed. 1993). Conventional processing system network design is more fully discussed in Data Network Design, by Darren L. Spohn, McGraw-Hill, Inc. (1993). Conventional data communications is more fully discussed in Data Communications Principles, by R.D. Gitlin, J.F. Hayes, and S.B. Weinstain, Plenum Press (1992), and in The Irwin Handbook of Telecommunications, by James Harry Green, Irwin Professional Publishing (2d ed. 1992). Each of the foregoing publications is incorporated herein by reference.

The foregoing detailed description includes many specific details. The inclusion of such detail is for the purpose of illustration only and should not be understood to limit the invention. In addition, features in one embodiment may be combined with features in other embodiments of the invention. Various changes may be made without departing from the scope of the invention as defined in the following claims.

As one example, the user's computer may include a personal computer, a general purpose computer, or a specially programmed special purpose computer. Likewise, the device application may execute on an embedded system, or even a general purpose computer or specially programmed dedicated computer closely connected to and/or controlling the device. Either of these may be implemented as a distributed computer system rather than a single computer. Similarly, the present invention can be used in a network such as the Internet, an Intranet, the World Wide Web, a modem over a POTS line, and/or any other method of communicating between computers and/or devices. Moreover, the processing could be controlled by a software program on one or more computer systems or processors, or could even be partially or wholly implemented in hardware, or could be partly embedded within various devices.

This invention is not limited to use in connection with, for example, particular types of devices with embedded systems. Further, the invention is not limited to particular protocols for communication. Any appropriate communication protocol may be used with the meter devices.

The user displays may be developed in connection with HTML display format. Although HTML is the preferred display format, it is possible to utilize alternative display formats for displaying reports and obtaining user instructions. The invention has been discussed in connection with particular examples. However, the principals apply equally to other examples. Naturally, the relevant data may differ, as appropriate.

Further, this invention has been discussed in certain examples as if it is made available by a provider to a single customer with a single site. The invention may be used by numerous customers, if preferred. Also, the invention may be utilized by customers with multiple sites and/or users. In addition, other alternatives to the above are considered within the scope of the present invention. For example, the specific sequence described above can be modified as appropriate so long as the overall functionality of the model-code manager 401 and related components is performed or substantially performed as described herein.

The system used in connection with the invention may rely on the integration of various components including, as appropriate and/or if desired, hardware and software servers, applications software, database engines, firewalls, security, production back-up systems, and/or applications interface software. The configuration may be network-based, and optionally utilize the Internet as an exemplary primary interface with the customer for information delivery.

From the user's perspective, according to some embodiments the user may access the public Internet or other suitable network and look at its specific information at any time from any location as long as the user has Internet or other suitable access.

### Appendix A

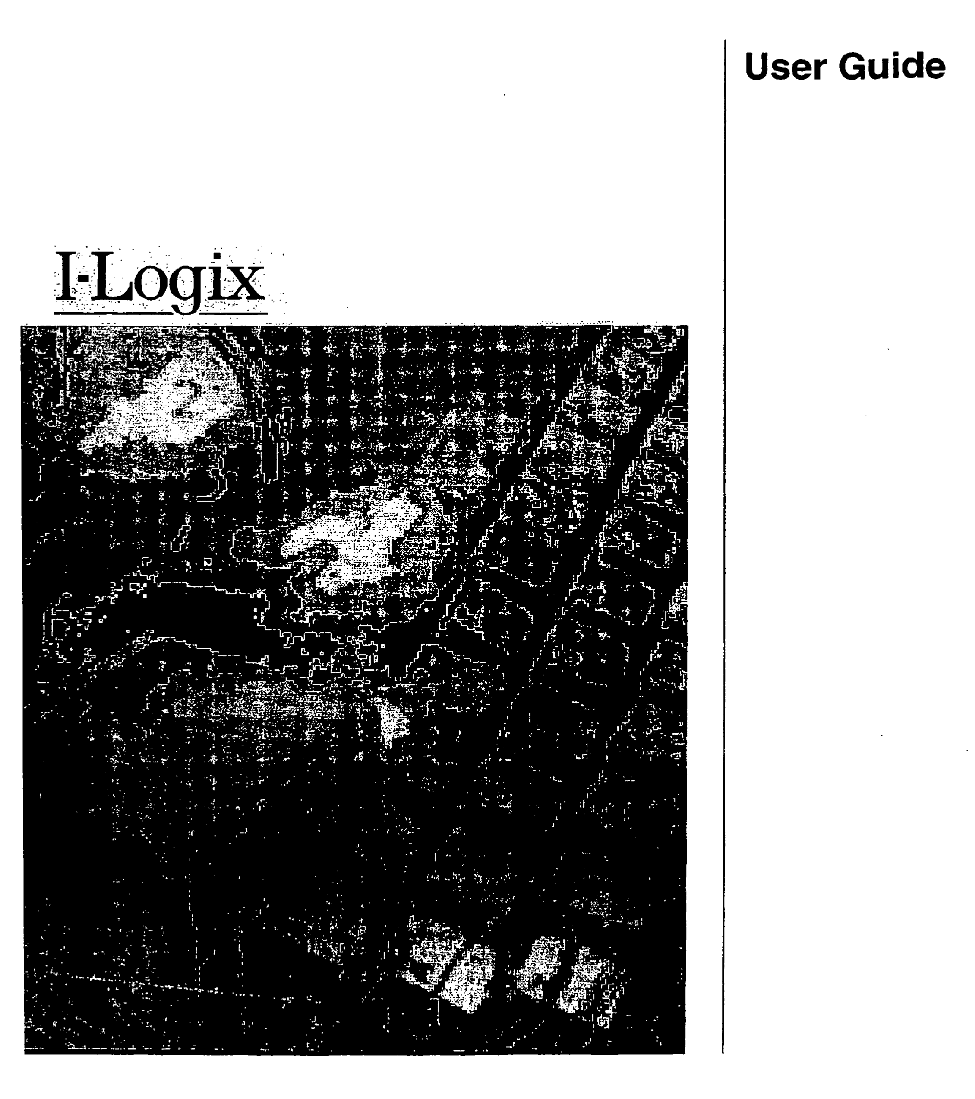

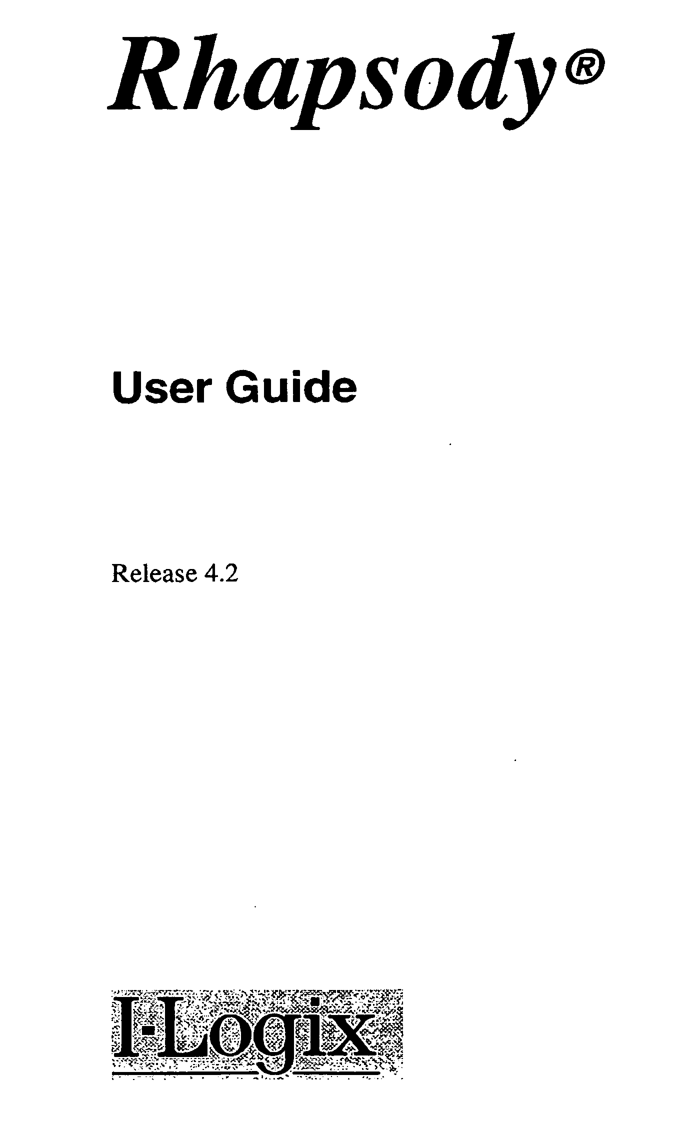

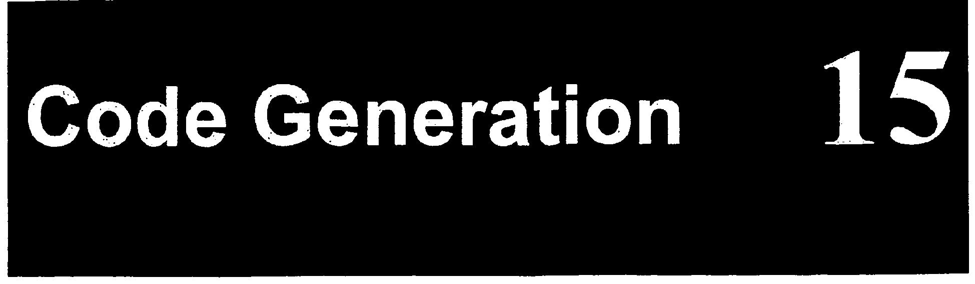

Rhapsody generates implementation code from your UML model. You can generate code either for an entire configuration or for selected classes. Inputs to the code generator are the model and the code generation (<lang>_CG and CG) properties. Outputs from the code generator are source files in the target language: specification files, implementation files, and makefiles.

This chapter describes how Rhapsody generates code from the UML models. It includes information on the following topics:
- Overview, page 15-2
- Generating Code, page 15-4
- Building the Target, page 15-6
- Running the Executable, page 15-7
- Generating Code for Individual Elements, page 15-8
- Results of Code Generation, page 15-9
- Viewing and Editing Code, page 15-10
- Roundtripping, page 15-12
- Deleting Redundant Code Files, page 15-22
- Generating Code for Actors, page 15-22
- Generating Code for Component Diagrams, page 15-23
- Cross-Package Initialization, page 15-25
- Class Code Structure, page 15-26
- Wrapping Code with #ifdef-#endif, page 15-36
- Overloading Operators, page 15-36
- Using Anonymous Instances, page 15-41
- Using Relations, page 15-43
- Support for Static Architectures, page 15-45
- Using Standard Operations, page 15-48

### Overview

Between the code generator and the real-time Object Execution Framework (OXF), which is provided as a set of libraries, Rhapsody can implement most low-level design decisions for you. These decisions include how to implement design elements such as associations, multiplicities of related objects, threads, and state machines.

There are two distinct ways to generate code:
- **Elaborative**-You can use Rhapsody simply as a code browser, with all relations, state machine generation, and so on disabled. No instance initializations or links are generated-you do everything manually.
- **Translative**-You can draw a composite with components, links, and state machines, click a button, and get your application running-having to write only a minimum of code (you would have to write at least some actions in a statechart).

The Rhapsody code generator can be both elaborative and translative to varying degrees. Rhapsody does not force translation, but allows you to refine the code generation process to the desired level. Rhapsody can run in either mode, or anywhere between these two extremes.
**Note:** Microsoft is the default working environment for Rhapsody. You can specify other "out-of-the-box" environments in the environment settings for the configuration. See "Setting Component Configurations in the Browser" on page 12-12 for more information.

Figure 15.1 shows the elements involved in generating code and building a component in Rhapsody. The dependency arrows indicate which files are generated and which files are included by the code generator and compiler, respectively. The thick borders around the code generator and compiler indicate that these are active classes.

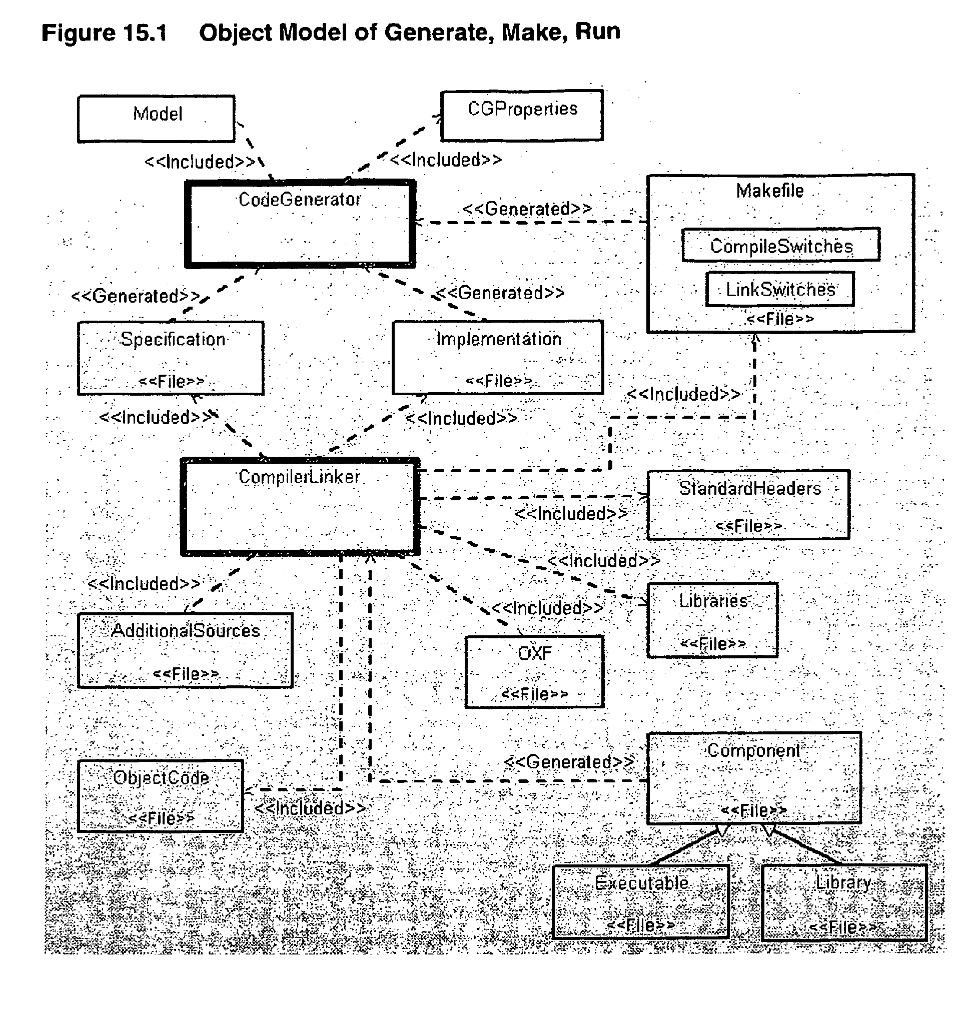

### Generating Code

Before you generate code, you must set the active configuration, described in "Setting the Active Configuration" on page 12-15. The code generator automatically runs the checker to check for inconsistencies that might cause problems in generating or compiling the code. Some of the checks performed by the checker detect potentially fatal conditions that might cause code generation to abort if not corrected before generating code. See Chapter 14, Checks, for information about selecting checks to perform.

To generate code for the active configuration, do one of the following:
- Select **Code > Generate > <active configuration>**.
- Press Ctrl + F7.

Note that it is possible to generate code without intertask communication and event dispatching from Rhapsody, but this will disable the animation and visual debugging features. You can mitigate this effect by wrapping your in-house intertask communication and event dispatching routines inside an operation that is defined inside the model. In this case, the visualization is of the operation as a representative of your "real" intertask communication and event dispatching.

### Aborting Code Generation

To end a long code generation session, select **Code > Stop *X***. For example, if you are in the middle of building the code, the name of the option is **Stop Build**.

Another way to abort code generation is to create a file named abort_code_gen (no extension) in the root generation directory of the configuration. Rhapsody checks for the file while generating code; if the file is found, Rhapsody deletes the file and aborts code generation.

### Incremental Code Generation

After initial code generation for a configuration, Rhapsody generates code only for elements that were modified since the last generation. This provides a significant performance improvement by reducing the time required for generating code.

In support of incremental code generation, Rhapsody creates a file in the configuration directory named <configuration>.cg_info. This file is internal to Rhapsody and does not need to be placed under configuration management.

### Forcing Complete Code Generation

In some instances, you might want to generate the entire model, rather than just the modified elements.

To force a complete regeneration of the model, select **Code > Re Generate > <configuration>**.

### Regenerating Configuration Files

When you delete classes or packages from the model, or add the first global instance to a package, you need to regenerate the configuration files (main and makefile).

To force regeneration of the configuration files, do one of the following:
- Select **Code > Re Generate > Configuration Files**.
- Right-click the active configuration in the browser and select **Generate Configuration Main and Makefiles** from the pop-up menu.

### Smart Generation of Packages

Rhapsody generates code for a package only if it contains meaningful information, such as instances, types, and functions. This streamlines the code generation process by preventing generation of unnecessary package files.

To modify this behavior, use the CG : : Package : : GeneratePackageCode property. See the *Properties Reference Guide* for more information.

To remove existing package files that do not contain meaningful information, select **Code > Clean Redundant Files**.

### Considerations When Generating Code

When you generate code, consider the following:
- A reactive class that inherits from a non-reactive class might cause a compilation warning in Instrumentation mode. You can ignore this warning.
- Self (circular) activations of triggered operations are permitted only in flat (non-reusable) statecharts. If they occur in reusable statecharts, the generated application ignores them. The code generator does not check this condition.
- If a class has a dependency on another class that is outside the scope of the component, Rhapsody does not automatically generate an #include statement for the external class. You must set the dependent class's SpecInclude property under <lang>_CG : : Class.

### Automatic Code Generation

If you select Code > Dynamic Model Code Associativity (either the **Bidirectional or Online Code Generation** setting), Rhapsody generates code automatically when an element changes and is in need of regeneration. These changes include the following:
- Changes to the element itself, such as its name or properties or by adding or removing parts of the element
- Changes in its owner, an associated element, a project, a selected component. or a configuration
- Adding an element to the model via the Add to Model feature
- Checking out the element via the CM tool
- Using the Undo command while editing the element

Code for an element is automatically generated if one of the following occurs:
- You open a Code View window for the element, either with the internal text editor or an external editor. See "Viewing and Editing Code" on page 15-10.
- You set focus on an existing Code View window for that element.
   If you set dynamic model-code associativity to None or to Roundtrip, you must use the **Generate** command on the Code menu to generate code for the modified elements. For more information, see "Dynamic Model-Code Associativity" on page 15-13.

### Generating Makefiles

Rhapsody generates plain makefiles that include the list of files to be compiled and linked, their dependencies, and the compilation and link command.

Rhapsody generates makefiles when it generates the target file. The InvokeMake property under <lang>_CG: : <Environment> defines how to execute the makefile. You can customize the content of the makefile by modifying the MakeFileContent property under <lang>_CG : : <environment>. See the *Properties Reference Guide* for more information.

### Building the Target

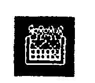

Once the code has been generated correctly, you can build the target component.
Use one of the followeing methods:
- Select **Code> Build <targetname>.exe.**
- Click the **Build Target** icon in the Code toolbar.

As Rhapsody compiles the code, compiler messages are displayed in the Output window. When compilation is completed, the message "Build Done" is displayed.

### Deleting Old Objects Before Building Applications

In some cases, it is possible for the linker to link an application using old objects. To clean out old objects, use one of the following methods:
- Use the **Code > Clean** command to delete all compiled object files for the current configuration. This is the recommended method.
- Use the **Code > Rebuild** command every time, which might be time-consuming for complex systems.
- Modify the start of make within etc /msmake. bat and remove the / I option. This will stop the build after the first source with errors.
- Within the site.prp file, change the CPPCompileCommand property from
String to MultiLine, and change the content so that before a file is compiled, the existing obj file is deleted.
For example:
**CPPCompileCommand Property**
**Metaclass Microsoft:**

```
      Property CPPCompileCommand MultiLine
      " if exist $OMFileObjPath erase $OMFileObjPath
           $(CPP) $OMFileCPPCompileSwitches
           /Fo\"$OMFileObjPath\" \"$OMFileImpPath\" "
```

**Metaclass VxWorks:**

```
      Property CPPCompileCommand MultiLine
      " @echo Compiling $OMFileImpPath
           @$(RM) $OMFileObjPath
           @$ (CXX) $(C++FLAGS) $OMFileCPPCompileSwitches -o
           $OMFileObjPath $OMFileImpPath"
```

### Running the Executable

Once you have built the target file, you can run it by using one of the following methods: 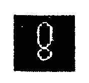
- Select **Code > Run** <config>.exe.
- Click the Run tool in the Code toolbar.

The default executable application is a console application. Once the application is started, regardless of its instrumentation level, a console window is displayed. If the application sends text messages to the standard output device, they are displayed in the console window.

### Shortcut for Creating an Executable

To generate the code and makefile, build the target, and run it all in one step, do one of the following: 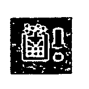
- Select **Code > Generate/Make/Run**.
- Click the **Generate/Make/Run** tool in the Code toolbar.

### Instrumentation

If you included animation instrumentation in your code, running the code displays the Animation toolbar. If you included trace instrumentation in your code, running the code displays the Trace window. You can choose animation or trace instrumentation when you set the parameters of your configuration. See "Configurations" on page 12-14.

For more information about instrumentation, see Chapter 18, Animation and Chapter 19, Tracing.

### Stopping Model Execution

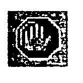

To stop a model execution in progress, use either of the following methods:
- Select **Code > Stop**.
- Click the **Stop Make/Execution** tool in the Code toolbar.

### Generating Code for Individual Elements

You can generate code for a package and all its classes, or generate code for selected classes within a package. You can generate code from the Code menu, the browser, or an OMD.

Before you generate code for a class or package, you must set the active configuration, just as if you were generating the executable for the entire model. For more information, see "Setting the Active Configuration" on page 12-15.

### Using the Code Menu

To generate code using the Code menu, do the following:
1. Select a class from the browser, or select one or more classes in an OMD.
2. Select **Code > Generate > Selected Classes**.

If you have generated code for the entire model at least once, the **Generate** command generates code only for elements that have been modified since the last code generation.

To generate code for all selected elements, regardless of modifications, do the following:
1. Select a class from the browser, or select one or more classes in an OMD.
2. Select **Code > Re Generate > Selected Classes**.

### Using the Browser

To generate code from the browser, do the following:
1. In the browser, right-click a package or class.
2. For a package, select **Generate Package** from the pop-up menu to generate code for all classes in the package.

For a class, select **Generate Class** from the pop-up menu to generate code only for that class.

### Using an Object Model Diagram

To generate code for a class in an OMD, right-click the class and select **Generate Class** from the pop-up menu.

### Results of Code Generation

When code generation completes, Rhapsody informs you of the results. Code generation messages are displayed in the Output window. Click on a message to view the relevant location in the model.

### Output Messages

When you generate code and build the target, messages are displayed in the Output window that either confirm the success of the operation or inform you of errors.

Some modeling constructs can cause code generation errors. Checking the model before generating the code enables you to discover and correct most of these errors before they can cause serious problems.

### Error Highlighting and Correction

Rhapsody might display compilation errors during the make process. To find the cause of a compilation error, double-click on the error message. Depending on the source of the error, one of the following results occurs:
- The statechart editor opens with a transition or state highlighted. This means that you entered a bad expression in that transition or state. Use the statechart editor to correct the error.
- The browser opens with an attribute or operation highlighted. This means that you entered a bad expression in the definition of the attribute or operation. Use the browser to correct the error.
- A source file opens with a line highlighted. This means that Rhapsody could not indicate the item in the design that needs correcting. In this case, you need to identify the source of the error as you would in a manual development cycle:
   - If the source of the error is found within an annotated section that can be roundtripped, fix the error in the source file and roundtrip it.
   - If the source of the error cannot be roundtripped, correct the construct in the model (such as an operation parameter definition) that caused the error.
   - If there is no apparent problem in the model and you have been generating code on selected classes, clean the whole configuration using the **Code/Clean** menu command. Compilation errors can occur if files were generated by different versions of the model.
   - In the unlikely case that there is nothing wrong in the model and you still get errors caused by code generation problems, contact I-Logix Customer Support.

### Viewing and Editing Code

The Code View feature enables you to edit code for classes or a selected package (but not configurations). You can select one or more classes and bring up a text editor of your choice to edit the code files directly.

### Setting the Scope of the Code View Editor

Before you can view or edit code, you must set the scope of the code view editor. Do the following:
1. Right-click the component that includes the packages or classes whose code you want to view.
2. Select **Set as Active Component** from the pop-up menu.
3. In the **Current Configuration** field, select the configuration you want to use.

### Editing Code

To edit generated code, do one of the following:
- Highlight the element, then select **Code > Edit > Selected classes**.
- Right-click the element, then select **Edit <element>**.

The specification and implementation files for the selected classes or package open in separate windows. You can use the internal text editor or an external editor to edit the files. See "Using an External Editor"for more information.

Depending on the dynamic model-code associativity (DMCA) setting, the changes you make to the code can be automatically roundtripped, or incorporated into the model. See "Automatic and Forced Roundtripping" on page 15-13 for more information.

In addition, the DMCA setting determines whether open code views are updated if the code is modified by an external editor or the code generator. In the case of code generation, the code might have changed significantly. If this happens, the following message might be displayed:

```
       filename: This file has been modified outside the source
       editor. Do you want to reload?
```

If you click Yes, the code view is refreshed with the new file contents and does not replace implementation files with obsolete information.

### Regenerating Code in the Editor

To re-generate code for files that are currently open in the editor, select **Code > Re Generate > Focused Views**.

### Associating Files with an Editor

You can associate a specific editor with the extension of a source file. Do the following:
1. Set the classcodeEditor property (under General: : Model) to **Associate.**
2. Click **OK** to apply your changes and dismiss the dialog box.
3. Click **OK** to apply your changes and dismiss the dialog box.
**Note:** Microsoft Visual C++ 6.0 includes an "Open with MSDEV" operation in the list of operations associated with *.cpp and *.h files. If you have MVC++ 6.0 installed, Rhapsody can erroneously associate the source files with the "Open with MSDEV" operation instead of with the "Open" operation.

To make sure that Rhapsody associates the MVC++ "Open" operation with the source files, do the following:
1. From Windows Explorer, select **View > Options > File Types**.
2. Select a file type (for example, **C Header File** associated with the file extension H), then select **Edit**.
   The Edit File Type dialog opens. Generally, the first action listed is "Open with MSDEV."
3. Click **New**, add an "Open" action, and associate the Open action with your preferred editor application.
4. Remove the "Open with MSDEV" action.

### Using an External Editor

To specify an external editor when you edit code, do the following:
1. Select **File > Project Properties**.
2. Select the Properties tab.
3. Navigate to the General: : Model : : EditorCommandLine property.
4. Click in the property value call in the right column to activate the field, then click the ellipsis (...) to open the Browse for File dialog box.
5. Browse to the location of the editor you want to use (for example, Notepad) and select the editor. Click **OK** to dismiss the dialog box. Rhapsody fills in the path in the property value field.
6. Click **OK** to dismiss the dialog box.

### Viewing Generated Operations

For each model, Rhapsody provides setter and getter operations for attributes and relations, initializer and cleanup operations, and one called startBehavior ( ). However, Rhapsody displays these automatically generated operations in the browser only if you set the GeneratedCodeInBrowser property (under CG: : CGGeneral) property to True. After you modify this property and regenerate the code, you will be able to view the automatically generated operations in the browser.

### Roundtripping

*Roundtripping* is the process that updates a model based on changes made to UML code previously generated by Rhapsody. You can activate a roundtrip in batch mode by updating the code in the file system and then explicitly synchronizing the model. You can also activate a roundtrip in an online, on-the-fly, mode by changing a model within one of the Rhapsody designated views.

### Dynamic Model-Code Associativity

Dynamic model-code associativity (DMCA) changes the code of a model to correspond to the changes you make to a model in the Rhaposdy UI. Conversely, when you edit the code of a model directly, DMCA redraws the model to correspond to your edits. In this way, Rhapsody maintains a tight relationship and traceability between the model and the code; the code represents another view of the model.

To set the DMCA feature, select **Code > Dynamic model/code associativity**. Select one of the following options from the pull-down menu:
- **Bidirectional**-Changes are automatically put through in both directions. That is, changes that are made to the model cause new, updated code to be generated, and edits made directly to the code are automatically added to the Rhapsody model.
- **Code Generation**-Changes made to the model automatically generate new code, but editing code does not automatically change the model.
- **Roundtripping**-Changes made directly to the code are brought into the Rhapsody model, but changes made to the model do not automatically generate new code. You can roundtrip only code that has been previously generated by Rhapsody; that is, you can only edit code that has been previously generated by Rhapsody and incorporate those changes back to the model. See the section "The Roundtripping Process" on page 15-13 for more information.
- **None**-DMCA is disabled.

These settings are stored in the following properties:
- ModelCodeAssociativityMode in the rhapsody ini file
- ModelCodeAssociativityFineTune underGeneral: :Model

### The Roundtripping Process

If you modify source files directly, then select **Code > Generate Code,** Rhapsody prompts you to roundtrip the code. This section specifies your options within the roundtripping procedure.

### Automatic and Forced Roundtripping

If you select automatic roundtripping (the **Bidirectional** or **Roundtripping** setting), the model is automatically updated with code changes if one of the following occurs:
- You change the window in focus, away from the Code View window.
- You save the file that you are editing.
- You close the Code View window.

To force roundtripping, do one of the following:
- Select **Code > Roundtrip**. Code is roundtripped for modified elements.
- Select **Code > Force Roundtrip**. Code is roundtripped for all elements.

You can force roundtripping at any time. If you have set DMCA to None or

CodeGeneration, the only way to roundtrip modified code back into the model is by forced roundtrip.

### Roundtripping Classes

To roundtrip all modified classes in the configuration, select **Code > Roundtrip > <current_config>**.

To roundtrip all the classes in the configuration, regardless of modifications, select **Code > Force Roundtrip > <current_config>**.

To roundtrip modifications for several classes, do the following:
1. In an OMD, left-click the classes.
2. Select **Code > Roundtrip > Selected classes**, or right-click the classes and select **Roundtrip** from the pop-up menu.

To force roundtripping of code in the current code view, select **Code > Force Roundtrip > Focused Views**.

Rhapsody responds by listing messages of the form "Roundtripping class x" for every class that is roundtripped. Note that if you attempt to roundtrip a class for which code was not generated (or for which the implementation file was erased),

Rhapsody responds with an appropriate error message and that class remains unchanged.

### Modifying Code Segments for Roundtripping

You can modify code segments for roundtripping that are procedural behaviors entered as operations and actions in statecharts.

Every segment in the implementation code has the following format:

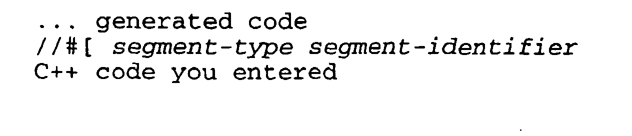

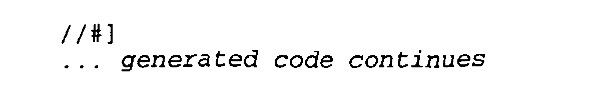

All these code segments are in the implementation files.

The only segments you can modify without losing the ability to roundtrip are as follows:
• Static reactions

```
           //#[ reaction reaction-id
           // you can modify this code
           someReactionCode( );
           // do not modify beyond the //#] sign
           //#]
```

• Exit action

```
            //#[ exitAction ROOT.idle.(Entry)
            someExitAction();
            //#]
```

• Entry action

```
            //#[ entryAction ROOT.idle.(Entry)
            someEntryAction();
            //#]
```

• Transition actions

```
            //#[ transition transition-id
            someTransitionCode( ) ;
            //#]
```

• Primitive operations (procedural behaviors)

```
            //#[ operation doit ( )
            someOperationCode( ) ;
           someMoreOperationCode( ) ;
            //#]
```

### Recovering Lost Roundtrip Annotations

To roundtrip your code, Rhapsody uses special annotations inserted by the code generator into the implementation file. These contain the prefix "// #". If you edit or delete these annotations, Rhapsody cannot trace your code back to the model.

To recover corrupted roundtrip annotations, do the following:
1. Rename the damaged file.
2. Regenerate code for this class. This should produce a new file with the correct annotations.
3. Copy your changes from the damaged file into the newly generated file.
4. Try to roundtrip again.

If you have modified any of the files, the following message is displayed:

```
   File <filename> has been modified externally. Do you want
   to roundtrip?
```

If you modified the file contents, you must roundtrip to add the modifications to the model. Choose **Yes** to confirm the roundtrip. Rhapsody updates the model and the generated code reflects your manual modifications.

If you choose **No,** Rhapsody overwrites the modified files and your changes will be lost.

### Supported Elements

In general, you can roundtrip the following components:
- Classes and class aggregations (template class, types, nested classes)
- Class elements (attributes, bodies of primitive operations, arguments, types)
- Class member functions (name, return type, arguments)
- Global elements (functions, variables, types, template functions)
- Packages
- Actions placed on transition labels
- Actions placed inside a state: on entry, on exit, or as a static reaction.
- Code within annotations
- The precompiled directive, #define.

Roundtripping is not supported for changes that are made to dependencies, inheritance, stereotypes, states, transitions, precompiled directives (#pragma, macros), file header and footer information, file mapping, or to data that is not supported by Rhapsody modifiers (for example, mutable or volatile).
**Note:** Rhapsody has properties that restrict or control how roundtripping changes the model. See "Roundtripping Properties" on page 15-21.
Rhapsody in C++/J provides more roundtripping features than Rhapsody in C. These are controlled by properties.

The following sections describe the changes to classes and packages that can be roundtripped in Rhapsody in C++. Currently, Rhapsody in J and Rhapsody in C support only a subset of this functionality.

### Roundtripping Classes

The following table lists the modifications that can be roundtripped in a class implementation file.

| **Element** | **Change** |
|---|---|
| Constructors and operations | • Change the name of an argument. When the name is changed, the argument description is lost. *Note that you cannot* change the argument type. |
| | • Modify bodies between the / / # [and / / #] delimiters. |
| State actions | Modify state actions (transition, entry, exit, and reactions in state) between the / / # [ and // #] delimiters. |
| State-action actions | Modify the state-action action (in activity diagrams) between the / / # [ and // #] delimiters. |
| Static attributes | Add or modify (but *not* remove) the initial value. |

Note that actions might appear in the code multiple times. Rhapsody will roundtrip the first occurrence of the action code. If two or more occurrences are modified, the first modified occurrence will be roundtripped. One technique is to call an operation in state, state action, and transition actions, thereby eliminating duplication of the action code and possible roundtrip ambiguity.

The following table lists the modifications that can be roundtripped in a class specification file.

| **Element** | **Change** |
|---|---|
| Arguments | Add or remove arguments for constructors and operations, but not arguments for triggered operations. Note that changes to argument descriptions in the class specification file are *not* roundtripped. |
| Association | Add or remove association, directed association, or aggregation. You must set the property CPP_ or JAVA_Roundtrip: : Update: :AcceptChanges property value to All. |
| Attributes | • Modify the descriptions. If there is a blank line at the end of the description, the description is lost. |
| | • Add or remove attributes. You must set the property CPP_ or JAVA_Roundtrip: : Update: :AcceptChanges property value to All. |
| | • Modify the name, type, or access of existing attributes. |
| Classes | • Modify the descriptions. If there is a blank line at the end of the description, the description is lost. |
| | • Modify the class name. In the next code generation, the modified class will be generated to new files, such as <new name>.h and <new name>.cpp. When using DMCA, you must close and reopen the class file to reassociate the class text with the proper class in the model. |
| | • Add a new class. The addition will be reflected under the associated package in the model. |
| Constructors and operations | • Modify the descriptions. If there is a blank line at the end of the description, the description is lost. |
| | • Add or remove constructors or operations. You must set the property CPP_ or JAVA Roundtrip : : Update : : AcceptChanges property value to All. |
| | • Modify types for existing operation or constructor arguments, but not their names. |
| | • Modify return types for existing operations. |
| Destructors | Modify the descriptions. If there is a blank line at the end of the description, the description is lost. |
| Nested classes | Add, remove, or modify a nested class. |
| Relations | • Modify the descriptions. If there is a blank line at the end of the description, the description is lost. |
| | • Modify the role name for an existing relation. Given a relation "Class_1* itsClass_ 1", you can modify the role name itsClass_1. For directed associations, you can also modify the related class Class_1 (for bidirectional association and aggregation, you cannot modify the related class). |
| Standard operations | Modify standard operations to inline, by adding "inline" to the declaration. Note that the definition is generated automatically-the property <lang>_CG : : Operation : : Inline is set to in_header. You cannot remove the inline keyword. |
| Triggered operations | Modify the descriptions. If there is a blank line at the end of the description, the description is lost. |
| User-defined types | Add, remove, or modify user-defined types. Set the property CPP_Roundtrip : : Type : : Ignore to False to reflect changes to the types declaration and deletion of types during roundtrip. |

### Roundtripping Packages

Rhapsody roundtrips function argument name changes in the package implementation file; however, changes to argument types are not roundtripped. When the name is changed, the argument description is lost.

Rhapsody does not roundtrip changes to the initial values of variables.

The following table lists the modifications can be roundtripped in a package specification file.

| **Element** | **Change** |
|---|---|
| Event | • Modify the description. Changes to argument descriptions are not roundtripped. |
| | • Add or remove event "arguments." Event arguments are actually attributes of the corresponding event class. |
| | • Modify an event "argument" type and name. When the name is changed, the argument description is lost. |
| Function | • Modify the description. Changes to argument descriptions are *not* roundtripped. |
| | • Add or remove a function. |
| | • Modify an existing function's return type. |
| Function argument | • Add or remove a function argument. |
| | • Modify an existing function's argument type. Changes to argument names are *not* roundtripped. |
| Instance | • Add or remove an instance. |
| | • Modify an instance's name or class type. |
| Variable | • Modify description. Changes to argument descriptions are not roundtripped. |
| | • Modify a variable type or name. |
| | • Add or remove a variable. |

To remove a function, variable, or instance with DMCA enabled, do the following:
1. Remove the element from the .h or .cpp file.
2. Switch focus to the .cpp or .h file while pressing the <Shift> key.
3. Remove the element from the second file.

The <Shift> key prevents DMCA from firing before you have made the changes to the second file.

To remove a function, variable, or instance with DMCA set to None, do the following:
1. Remove the element from the .h or .cpp file, then save the file.
2. Remove the element from the .cpp or .h file, then save the file.

### Roundtripping Properties

Rhapsody includes numerous properties to control roundtripping. They are specified in <lang> Roundtrip, where *<lang>* is the programming language. For example, in Rhapsody in C, these properties are in c_Roundtrip; in Rhapsody in C++, they are in CPP_Roundtrip.

See the *Properties Reference Guide* for detailed information about these properties.

The following table lists the properties that control roundtripping.

| **Property** | **Description** |
|---|---|
| NotifyOnInvalidatedModel | Determines whether a warning dialog box is displayed during roundtrip. This warning is displayed when information might get lost because the model was changed between the last code generation and the roundtrip operation. |
| | This property is available only in Rhapsody in C++. |
| ParserErrors | Specifies the behavior of roundtrip when a parser error is encountered. |
| PredefineIncludes | Specifies the predefined include path for roundtripping. |
| PredefineMacros | Specifies the predefined macros for roundtripping |
| ReportChanges | Defines which changes are reported (and displayed) by the roundtrip operation. |
| RestrictedMode | Specifies whether restricted-mode roundtripping is enabled. This property can be modified on the configuration level. This applies to RiCPP and RiJ only. |
| RoundtripScheme | Specifies whether to perform a basic or full roundtrip. |
| Ignore | Specifies whether to include user-defined types in a roundtrip operation. This applies only to RiC++. |
| AcceptChanges | Specifies which changes are applied to each CG element (attribute, operation, type, class, or package). You can apply separate properties to each type of CG element. This applies only to RiC++ and RiJ. |

### Deleting Redundant Code Files

A file can become redundant for the following reasons:
- An element mapped to a file is deleted or renamed.
- A change is made in the component scope.
- Changes are made in the mapping of elements to files.

Changes are made in component-level elements (components, configurations, folders, and files).

To delete redundant source files from the active configuration, select **Code > Clean Redundant Source Files.**

### Generating Code for Actors

When you create a configuration, you can choose to generate code for actors (see "Defining Features of a Configuration" on page 12-15). If you set the active configuration to generate code for actors, Rhapsody generates, compiles, and links the actor code into the same library or executable as the rest of the system.
This enables you to use actors to simulate inputs and responses to the system during system tests.

There are limits on the code generated for an actor, described in "Limitations" on page 15-23.

### Selecting Actors Within a Component

Classes have code generation properties that determine whether Rhapsody should generate code for relations and dependencies between actors and classes.

To select code generation for actors within a component, do the following:
1. Right-click on the component in the browser, then select **Features** from the pop-up menu.
2. Select the Initialization tab.
3. Under **Initial Instances,** select the actors to participate in the component.
4. Make sure **Generate Code for Actors** is selected.
   **Generate Code for** Actors is selected by default, but is unchecked when loading pre-version 3.0 models to maintain backward compatibility.

By default, relations between actors and classes are generated only if the actor is generated. You can-fine tune this within the class by using the GenerateRelationWithActors property under CG: : Relation. See the *Properties Reference Guide* for more information.

### Limitations

There are limitations on how actors can be created, which affect code generation. These limitations are as follows:
- An actor cannot be specified as a composite in an OMD. Therefore, Rhapsody does not generate code that initializes relationships among its components.
- The base of an actor must be another actor. The base of a class must be another class.
- An actor can embed only nested actors. A class can embed only nested classes.
- The name of an actor does not have to conform to code standards for a class name. But if an actor name is illegal-that is, it does not have a name that can be compiled-an error is generated during code generation.

### Generating Code for Component Diagrams

The following code generation semantics apply to component diagrams:
- Code generation is provided for library and executable build type components.
- Code generation is provided for folder and file component-related metatypes.
- Code is generated only with regard to relations between the binary components (library and executable).
- The following parts of a component diagram provide no code generation:
   - Relations involving files and folders
   - Interfaces realized by a component
   - All other component types that are not stereotyped «Library» or «Executable»
- A dependency between components generates code only if it has the «Usage» stereotype, with the following restrictions and limitations:
   - Related components must have a configuration with the same name.
   - If the two related components map the same element, code generation uses the first related component that was checked.
   - If an element is uniquely mapped (in the scope of a single binary component), the element file name is taken from that component.
   - If the element is not found in the scope of the generated component, related component, or uniquely mapped to some other component, the file name of the element is synthesized.

```
     To disable the synthesis of the name, set the
     UseDefaultNameForUnmappedElements property (under
     CG : : Component) to False.
```

The Components SearchPath property (under C : : Component) specifies the name of related components, although the dependencies are checked before the property. For example, a dependency from component A to component B is equivalent to putting "B" in the ComponentsSearchPath property (with the obvious advantage on name change recovery).

Consider the diagrams shown in the following figure.

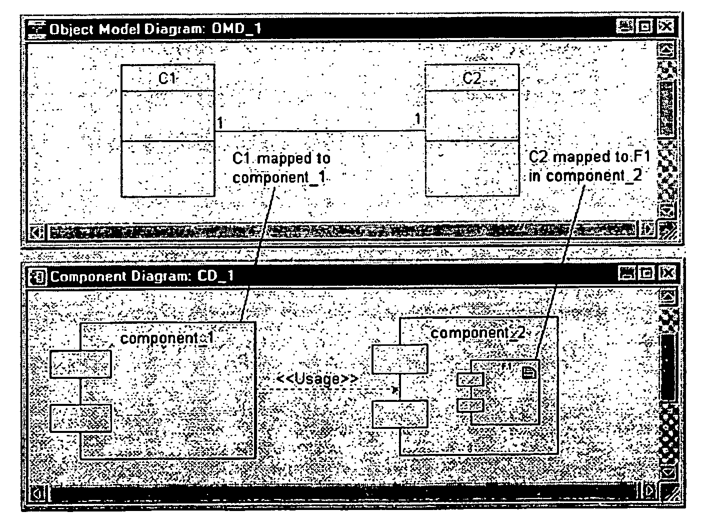

Classes C1 and C2 have a relation to each other (an association). The model has two components, component_1 and component_2, that each have a configuration with the same name. Component_1 has a dependency with stereotype «Usage» to component_2. Class C1 is in the scope of component_1.

Class C2 is not in the scope of component_1, but is mapped to a file F1 in component_2.

When the stereotype is applied, it reflects the following code generation semantics:
- Look for an element file name in related components (when the element is not in the scope of the current component).
   For example, when generating component_1, when Rhapsody needs to include C2, it will include F1 (the file in component_2).
- Add related components to the makefile include path. For example, in the component_1 makefile, a new line is added to the include path with the location of component_2.
- If the current component build type is executable, and a related component build type is library, add the library to the build of the current component. For example, if the build type of component_1 is executable, and the build type of component_2 is library, the component_1 makefile will include the library of component_2 in its build.

### Cross-Package Initialization

Rhapsody has properties that enable you to specify code that initializes package relations after package instances are initialized, but before these instances react to events. More generally, these properties enable you to specify any other initialization code for each package in the model. They enable you to initialize cross-package relations from any of the packages that participate in the relation or from a package that does not participate in the relation.

The properties that govern package initialization code are as follows:
- CG: : Package : : AdditionalInitializationCode-Specifies additional initialization code to run after the execution of the package initRelations ( ) method.
- CG : : Component : : InitializationScheme-Specifies at which level initialization occurs. The possible values are as follows:
   - ByPackage-Each package is responsible for its own initialization; the component needs only to declare an attribute for each package class. This is the default option and maintains backward compatibility with pre-V3.0
      Rhapsody models.
   - ByComponent-The component must initialize all global relations declared in all of its packages. This must be done by explicit calls in the component class constructor for each package's initRelations (), additional initialization, and startBehavior ( ) .

The following is an example of C++ code generated from the model in the diagram above when the InitializationScheme property is set to ByPackage.

The component code is as follows:

```
  class DefaultComponent {
  private :
       P1_OMInitializer initializer_P1;
       P2_OMInitializer initializer_P2;
   };
```

The P1 package code is as follows:

```
   P1_OMInitializer::P1_OMInitializer() {
     P1_initRelations( );
              < P1 AdditionalInitializationCode value>
           P1_startBehavior( );
   }
```

The following is an example of C++ component code generated when the InitializationScheme property is set to ByComponent:

```
  DefaultComponent :: DefaultComponent( ) {
       P1_initRelations( );
       P2_initRelations( );
           < P1 AdditionalInitializationCode value>
           < P2 AdditionalInitializationCode value>
       P1_startBehavior( );
       P2_startBehavior( );
   }
```

### Class Code Structure

This section describes the structure of the generated code, including information on how the model maps to code and how you can control model mapping. In addition to the model elements, the generated source code includes annotations and, if instrumented, instrumentation macros.
**Note:** Annotations map code constructs to design constructs. They play an important role in tracing between the two. Do not touch or remove annotations. If you do, you hinder tracing between the model and the code. Annotations are comment lines starting with two slashes and a pound sign (// #).

Instrumentation macros become hooks and utility functions to serve the animation/trace framework. They are implemented as macros to minimize the impact on the source code. If you remove instrumentation macros, animation cannot work correctly.

The code structures shown are generic, using generic names such as *class* and *state.* Your code will contain the actual names.

### Class Header File

The class header file contains the following sections:
- Prolog (see page 15-27)
- Forward declarations (see page 15-28)
- Instrumentation (see page 15-28)
- Virtual and private inheritance (see page 15-28)
- User-defined attributes and operations (see page 15-29)
- Variable-length argument lists (see page 15-29)
- Relation information (see page 15-29)
- Statechart implementation (see page 15-30)
- Events interface (see page 15-31)
- Serialization instrumentation (see page 15-31)
- State classes (see page 15-32)

### Prolog

The prolog section includes the framework file, and a header or footer file (if applicable).

You can add additional include files using the <lang>_CG: : Class/Package: : SpecIncludes property. You might have to do this if you create dependencies to modules that are not part of the Rhapsody design.

For example:

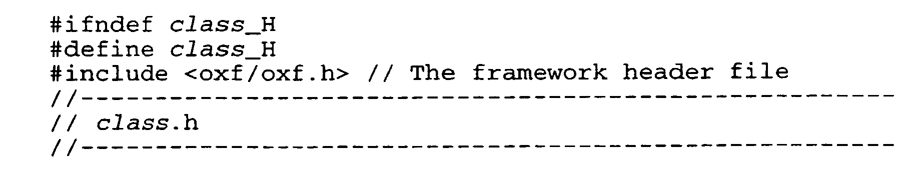

### Relationships to Other Classes

This section of the header file includes forward declarations for all the related classes. These are based on the relationships of the class with other classes specified in the model.

For example:

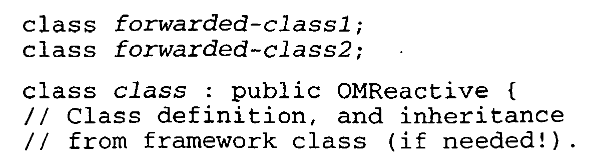

### Instrumentation

If you compiled with instrumentation, instrumentation macros provide information to animation about the run-time state of the system.

For example:

```
       DECLARE_META // instrumentation for the class
```

### Inheritance

With virtual inheritance, the subclass inherits only one set of members from a common ancestor through multiple inheritance.

To use virtual inheritance, set the Virtual Inherits property in the subclass to the name of the superclass from which the subclass should inherit as virtual.

Separate multiple superclass names with commas.

For example, if class B has a superclass A and the Virtual Inherits property for B is set to "A", the following declaration is generated for B:

```
       class B : virtual public A {...};
```

With private inheritance, the subclass inherits only the public members of the superclass. The inherited members become private in the subclass.

To use private inheritance, set the Private Inherits property in the subclass to the name of the superclass from which the subclass should inherit as private.

Separate multiple superclass names with commas.

For example, if a class B has a superclass A and the Private Inherits property for B is set to "A", the following declaration is generated for B:

```
  class B : private A {...};
```

### User-Defined Attributes and Operations

In this section, all operations and attribute data members are defined. The code in this section is a direct translation of class operations and attributes. You control it by adding or removing operations and attributes from the model.

For example:

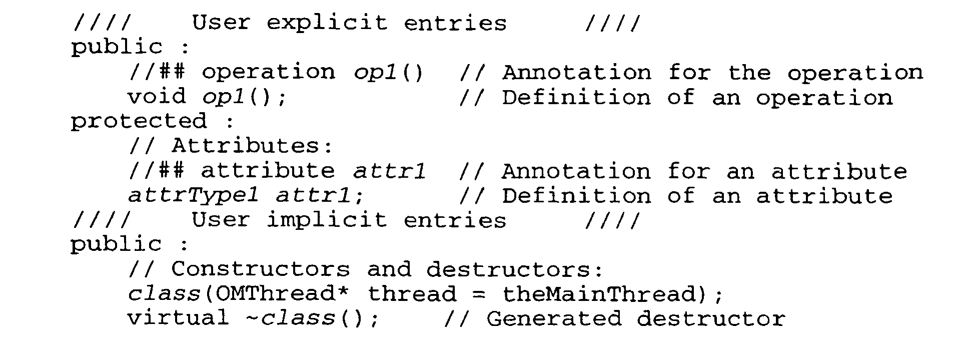

### Variable Length Argument Lists

To add a variable-length argument list (...) as the last argument of an operation, open the Properties dialog box for the operation, and set the

CG: : Operation: :VariableLengthArgumentList property to True.

For example, if the VariableLengthArgumentList property is set to True for an operation void foo (int i), the following declaration generated for foo ( ) :

```
       void foo(int i, ...);
```

### Synthesized Methods and Data Members for Relations

This section of the header file includes every relation of the class defined in the model. If appropriate, it includes a data member, as well as a set of accessor and mutator functions to manipulate the relation.

You can control this section by changing the relation properties and container properties. See the *Properties Reference Guide* for more information about the CG properties.

For example:

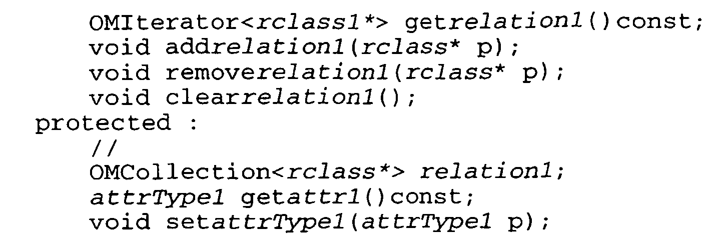

### Statechart Implementation

This section of the header file contains data member and function definitions for statechart behavior of the class. The contents of this section depend on the implementation strategy for the statechart. You can control this section in one of two ways:
- Change the statechart implementation strategy from reusable to flat.
- Disable code generation for statecharts.

For example: 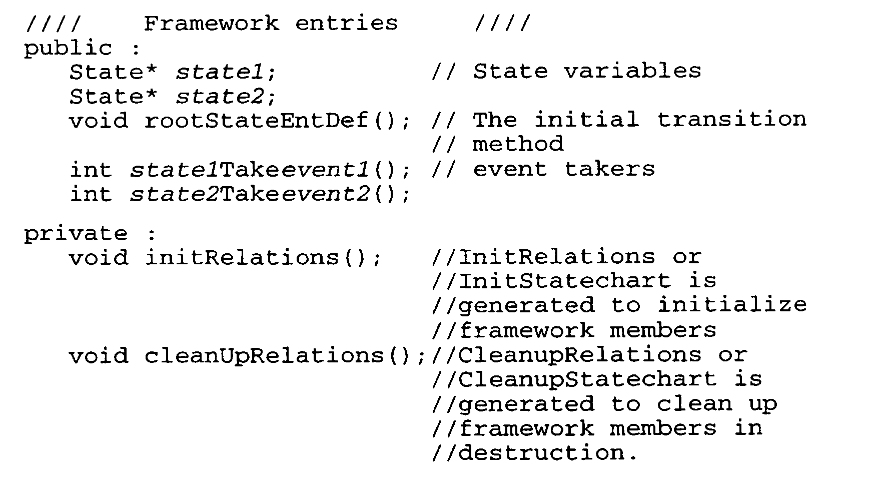 **Note:** The initRelations ( ) and cleanUpRelations ( ) operations are generated only if the property CG: Class: InitCleanUpRelations is set to true. See the *Properties Reference Guide* for more information.

### Events Interface

The section of the code illustrates events consumed by the class. It is for documentation purposes only, because all events are handled through a common interface found in OMReactive. This section is useful if you want to implement the event processing yourself.

For example: 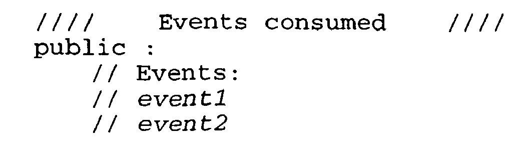 Note that code generation supports array types in events. Is it possible to create the following GEN ( ) :

```
           Client->GEN(E("Hello world!"));
```

In this call, E is defined as follows:

```
            class E : public OMEvent {
               Char message[13];
             };
```

### Serialization Instrumentation

If you included instrumentation, the following instrumentation macro is included in the header file:

```
       DECLARE__META_EVENT
       } ;
```

It expands to method definitions that implement serialization services for animation.

### State Classes

The state defines state classes to construct the statechart of the class. State classes are generated in the reusable state implementation strategy.

For example: 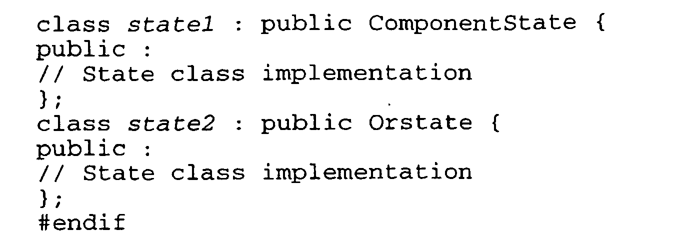 You can eliminate the state classes by choosing the flat implementation strategy, where states are manifested as enumeration types.

### Implementation Files

The class implementation file contains implementation of methods defined in the specification file. In addition, it contains instrumentation macros and annotations. As noted previously, eliminating or modifying either instrumentation macros and annotations can hurt the tracing and functionality between your model and code.

### Headers and Footers

You can define your own headers and footers for generated files. See the *Properties Reference Guide* for more information.

### Prolog

The prolog section of the implementation file includes header files for all the related classes. You can add additional #include files using the C_ and CPP: : Class/Package: : ImpIncludes property. See the *Properties Reference Guide* for more information on this property.

You can wrap sections of code with #ifdef #endif directives, add compiler-specific keywords, and add #pragma directives using prolog and epilog properties. For more information, see "Wrapping Code with #ifdef-#endif" on page 15-36.

The following code shows a sample prolog section:

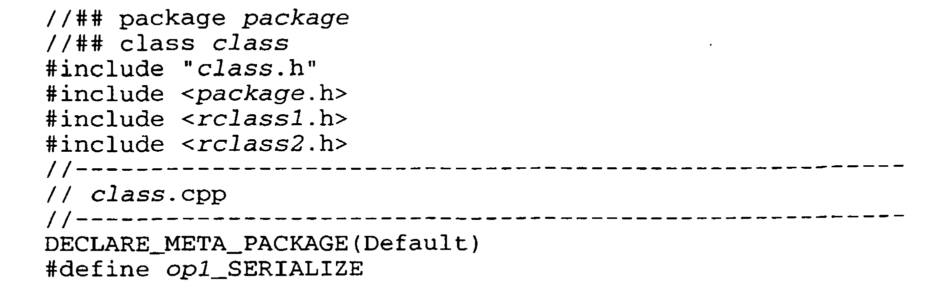

### Constructors and Destructors

A default constructor and destructor are generated for each class. You can explicitly specify additional constructors, or override the default constructor or destructor by explicitly adding them to the model.

For example:

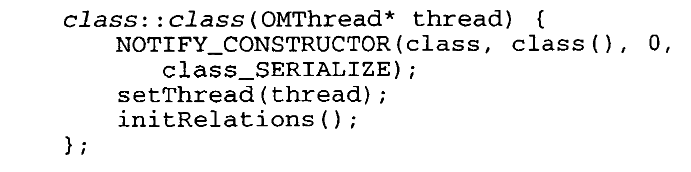

If you are defining states, use initStatechart instead of initRelations:

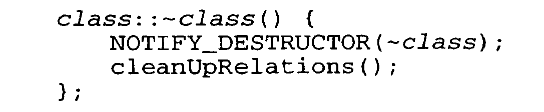

Similarly, if you are defining states, use cleanUpStatechart instead of cleanUpRelations.

### Operations

The following code pattern is created for every primitive (user-defined) operation:

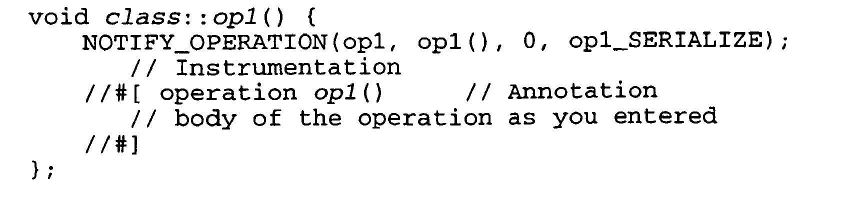

### Accessors and Mutators for Attributes and Relations

Accessors and mutators are automatically generated for each attribute and relation of the class. Their contents and generation can be controlled by setting relation and attribute properties.

For example:

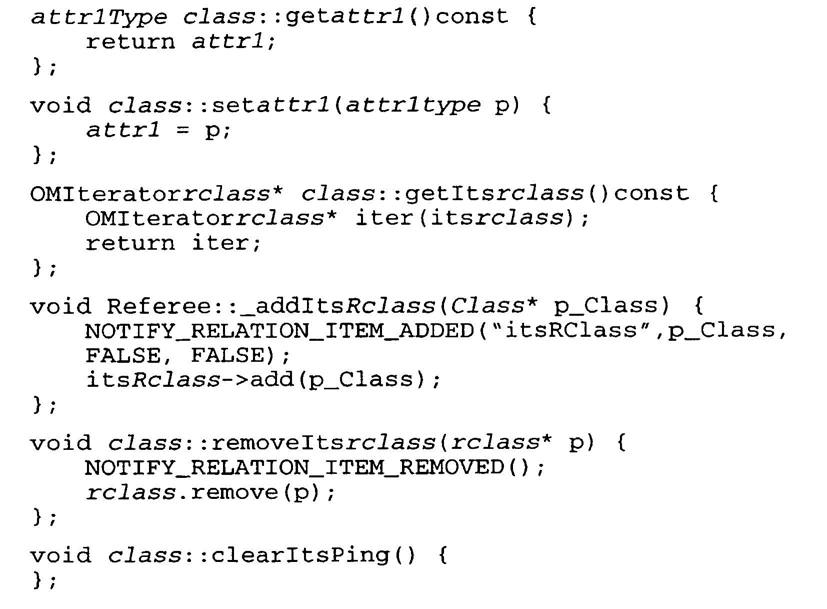

### Instrumentation

This section includes instrumentation macros and serialization routines used by animation.

For example:

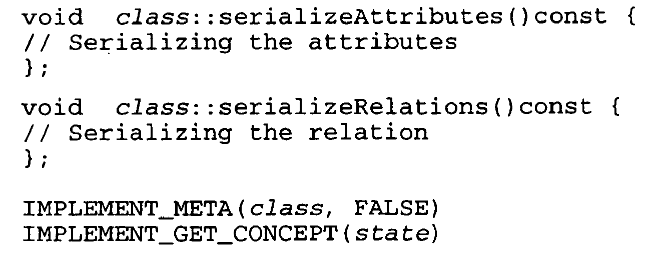

### State Event Takers

These methods implement state, event, and transition behavior. They are synthesized based on the statechart. If you set the CG::Attribute/Event/File/Generalization/Operation/Relation: :Generate property of the class to false, they are not generated.

For example:

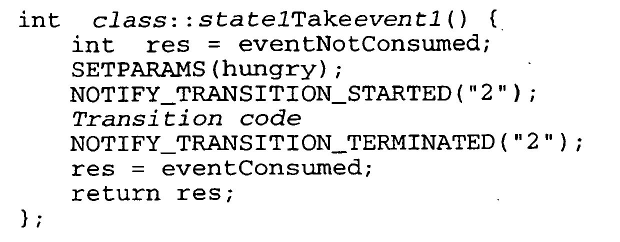

### Initialization and Cleanup

These methods implement framework-related initialization and cleanups.

For example:

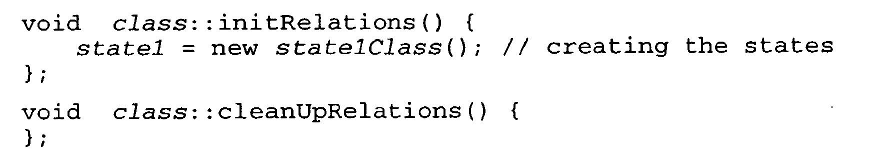

### Implementation of State Classes

This section implements a dispatch method and a constructor for each state object. You can change this by choosing the flat implementation strategy, which does not generate state classes.

For example:

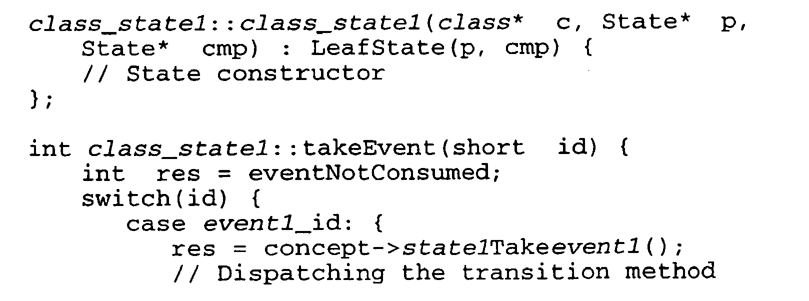

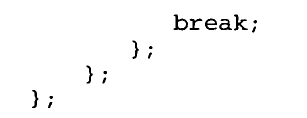

### Wrapping Code with #ifdef-#endif

If you need to wrap an operation with an #ifdef #endif pair, add a compiler-specific keyword, or add a #pragma directive, you can set the SpecificationProlog,SpecificationEpilog, ImplementationProlog, and ImplementationEpilog properties for the operation.

For example, to specify that an operation is available only when the code is compiled with _DEBUG, do the following:
- Set SpecificationProlog to #ifdef _DEBUG.
- Set SpecificationEpilog to #endif.
- Set ImplementationProlog to #ifdef DEBUG.
- Set ImplementationEpilog to #endif.

The same properties are available for configurations, packages, classes, and attributes.
**Note:** Rhapsody does not implicitly add a trailing new line. This enables you to add the prolog and epilog to the same line. If you want the prolog and epilog to be on different lines, press Enter.

### Overloading Operators

You can overload operators for classes created in Rhapsody. For example, for a Stack class, you can overload the "+" operator to automatically perform a push ( ) operation, and the "-" operator to automatically perform a pop ( ) operation.

All of the overloaded operators (such as operator+ and operator-) can be modeled as member functions, except for the stream output operator<<, which is a global function rather than a member function and must be declared a friend function. The overloaded operators that are class members are all defined as primitive operations.

To illustrate operator overloading, consider two classes, Complex and MainClass, defined as follows:

### Class Complex

### Attributes:

double imag;
double real;

**Operations**:

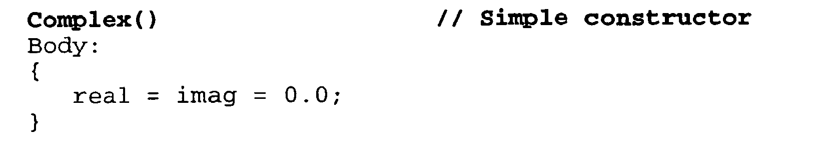

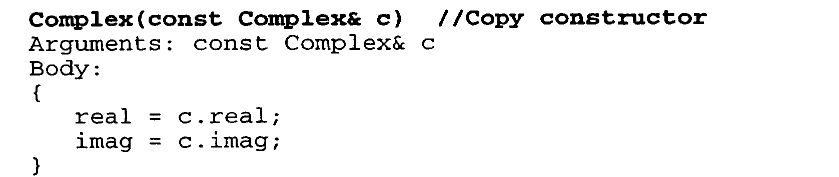

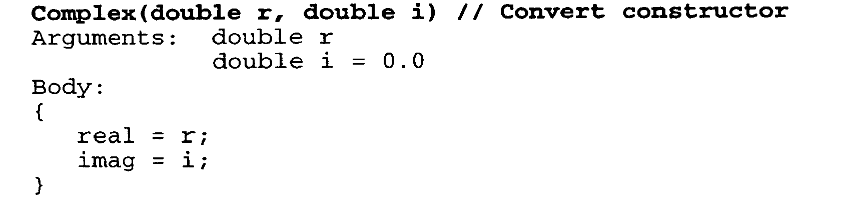

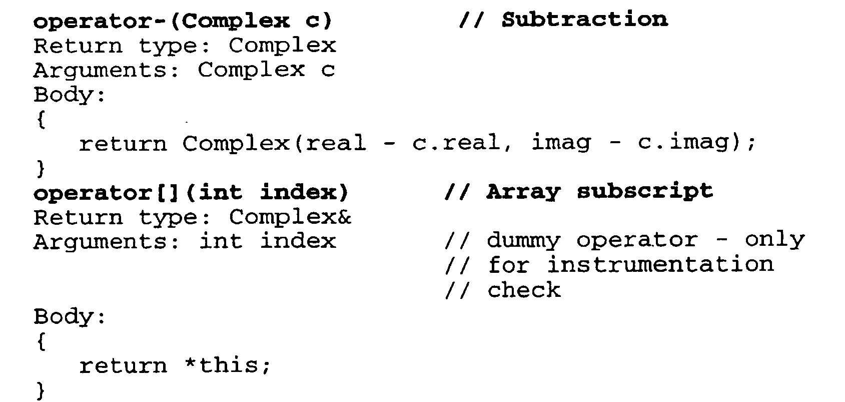

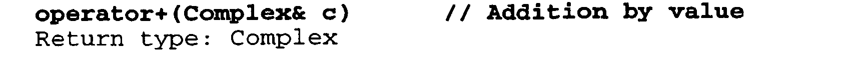

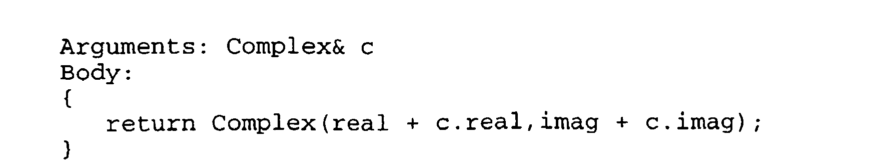

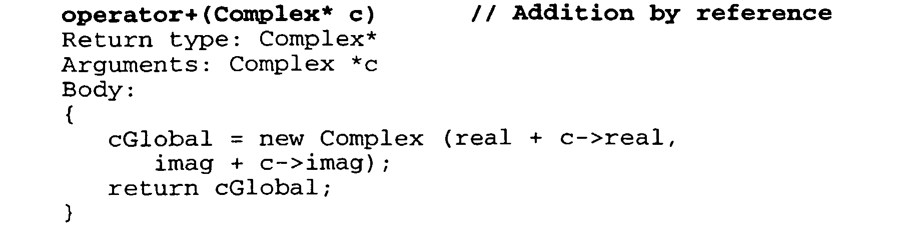

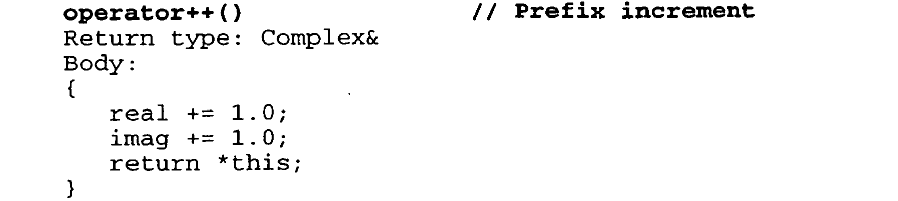

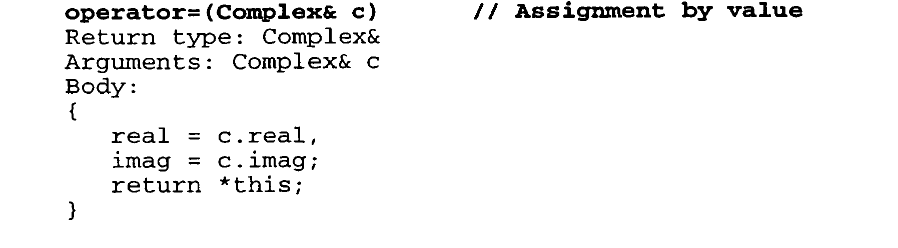

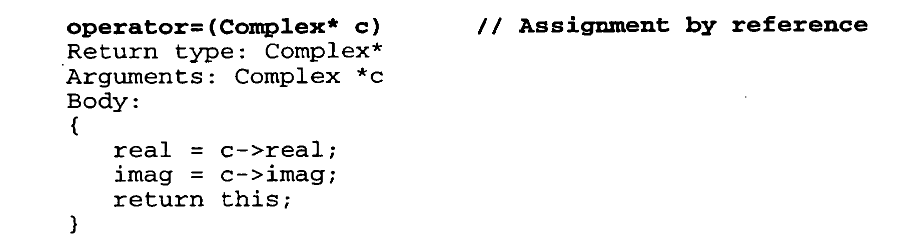

The following are some examples of code generated for these overloaded operators.

This is the code generated for the overloaded prefix increment operator:

```
       Complex& Complex::operator++() {
           NOTIFY_OPERATION(operator++, operator++(), 0,
               operator_SERIALIZE);
            //#[ operation operator++()
           real += 1.0;
            imag += 1.0;
           return *this;
            //#]
       };
```

This is the code generated for the overloaded + operator:

```
       Complex Complex::operator+(Complex& c) {
           NOTIFY_OPERATION(operator+, operator+(Complex&), 1,
               OM_operator_1_SERIALIZE);
            //#[ operation operator+(Complex&)
           return Complex(real + c.real, imag + c.imag);
           //#]
       } ;
```

This is the code generated for the first overloaded assignment operator:

```
       Complex& Complex::operator=(Complex& c) {
           NOTIFY OPERATION(operator=, operator=(Complex&), 1,
               OM_operator_2_SERIALIZE);
           //#[ operation operator=(Complex&)
           real = c.real;
           imag = c.imag;
           return *this;
       //#]
       };
```

The browser lists the MainClass, which is a composite that instantiates three Complex classes.

Its attributes are as follows:
Complex* c1
Complex* c2
Complex* c3

Its operations are as follows:

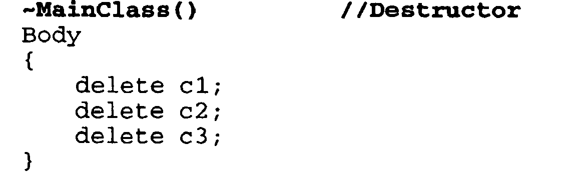

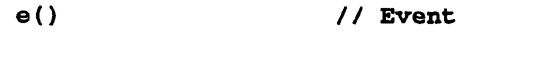

The stream output operator << is a global function that must be declared a friend to classes that want to use it. It is defined as follows:

```
    operator<<
   Return type: ostream&
   Arguments: ostream& s
              Complex& c

   Body:
    {
        s << "real part = " "<< c.real <<
            "imagine part = " << c.imag << "\n" << flush;
        return s;
    }
```

To watch the various constructors and overloaded operators as they are being called, do the following:
1. Assign animation instrumentation to the project by selecting **Code > Set Configuration > Edit > Setting tab.**
2. Make and run DefaultConfig. exe.
3. Using the animator, create an animated sequence diagram (ASD) that includes the MainClass and instances Complex [0] : Complex,
   Complex[1]:Complex, and Complex[2]:Complex.
4. Click **Go** on the Animation bar to watch the constructor and overloaded operator messages being passed between the MainClass and its part instances.

The ASD will be similar to the following figure.

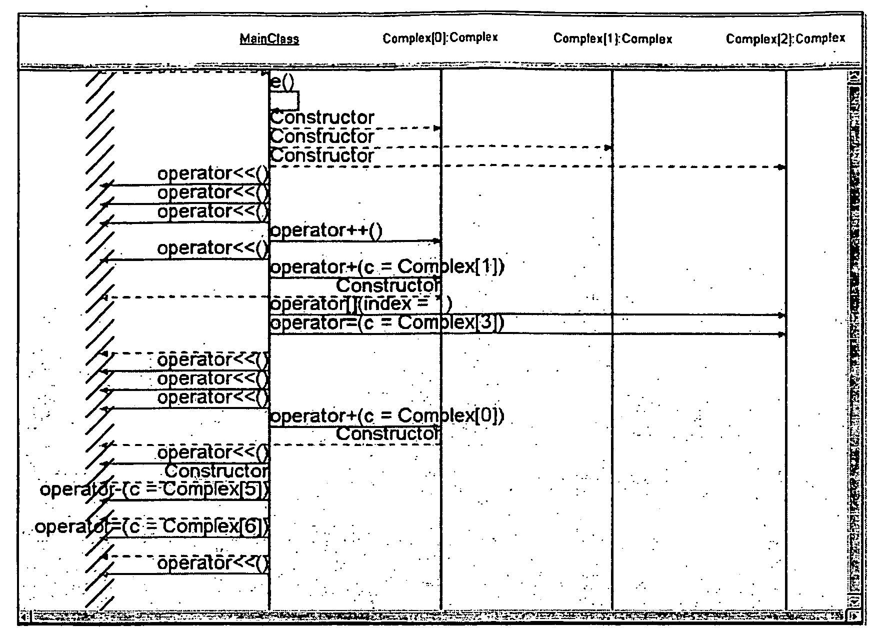

### Using Anonymous Instances

In Rhapsody, you can create anonymous instances that you manage yourself, or create instances as components of composite instances that are managed by the composite framework.

### Creating Anonymous Instances

You can create anonymous instances, apply the C++ new operator as in any conventional C++ program. Rhapsody generates a default constructor (ctor) for every class in the system. You can add additional constructors using the browser.

For example, to create a new instance of class A using the default constructor, enter the following code:

```
          A *a = new A();
```

For reactive and composite classes, the default constructor takes a thread parameter that, by default, is set to the system's main thread. To associate the instance with a specific thread rather than the system's main thread, you must explicitly pass this parameter to the constructor.

The following example creates an instance of class A and assigns it to a thread T.

```
       A *a = new A(T);
```

After creating a new instance, you would probably call its relation mutators to connect it to its peers (see "Using Relations" on page 15-43). If the class is reactive, you would probably call its startBehavior ( ) method next.

Composite instances manage the creation of components by providing dedicated operations for the creation of new components. For each component, there is an operation phil of type Philosopher. The new phi1 operation creates a new instance, adds it to the component relation, and passes the thread to the new component.

The following code shows how the composite sys can create a new component phil.

```
   Philosopher *pPhil = sys->newPhil();
```

After creating the new instance, you would probably call its relation mutators to connect it to its peers. If the class is reactive, you would probably call its startBehavior () method next.

### Deleting Anonymous Instances

In Rhapsody, you manage anonymous instances yourself. As a result, it is your responsibility to delete them. Components of composite instances are managed by the composite. To delete them, you must make an explicit request of the composite object.

Apply the C++ delete operator as in any conventional C++ program. Deletion of instances involves applying the destructor of that instance. Rhapsody generates a default destructor for every class in the system. You can add code to the destructor through the browser.

For example, to delete an instance pointed to by aB, use the following call:

```
       delete aB;
```

### Deleting Components of a Composite

For each component of a composite, there is a dedicated operation that deletes an instance of that component.

For example, deleting an instance pointed to aB from a component named compB in a composite C, use the following call:

```
   C->deleteCompB(aB);
```

### Using Relations

Relations are the basic means through which you reference other objects. Relations are implemented in the code using container classes. The Rhapsody framework contains a set of container classes used by default. You can change the default, for example to use Standard Template Library (STL)™ containers, using properties. See the *Properties Reference Guide* for more information.

The collections and relation accessor and mutator functions documented in this chapter refer to the default set provided with Rhapsody.

### To-One Relations

To-one relations are implemented as simple pointers. Their treatment is very similar to that of attributes; that is, they also have accessor and mutator functions.

If B is a class related to A by the role name role, A contains the following data member:

```
       B* role;
```

It contains the following methods:

```
       B* getRole();
       void setRole(B* p_B);
```

These defaults are modifiable through the properties of the role. See the *Properties Reference Guide* for more information.

### To-Many Relations

To-many relations are implemented by collections of pointers using the OMCollection template.

If F is a class name multiply related to E by role name role, E contains the following data member:

```
       OMCollection<F*> role;
```

The following methods are generated in E to manipulate this relation:
• To iterate through the relation, use the following accessor:

```
           OMIterator<F*> getRole() const;
```

For example, if you want to send event x to each of the related F objects, use the following code:

```
           OMIterator<F*> iter(anE->getRole());
           while(*iter)
           {
           *iter→GEN();
           iter++;
       }
```

In this code, anE is an instance of E.
• To add an instance to the collection, use the following call:

```
       void addRole(F* p_F);
```

• To remove an instance from the collection, use the following call:

```
       void removeRole(F* p_F);
```

• To clear the collection, use the following call:

```
       void clearRole();
```

These defaults are modifiable through the properties of the role. See the *Properties Reference Guide* for more information.

### Ordered To-Many Relations

Ordered to-many relations are implemented by collections of pointers using the OMList template.

A to-many relation is made ordered by making the ordered property for the relation to True.

All the manipulation methods are the same as described in "To-Many Relations" on page 15-43.

### Qualified To-Many Relations

A qualified to-many relation is a to-many relation qualified by an attribute in the related class. The qualified to-many is implemented by a collection of pointers using the OMMap template.

All the manipulation methods are the same as described in "To-Many Relations" on page 15-43. In addition, the following key qualified methods are provided.

```
   F* getRole(type key) const;
   void addRole(type key, F* p_F);
   void removeRole(type key);
```

### Random Access To-Many Relations

A random access to-many relation is a to-many relation that has been enhanced to provide random access to the items in the collection.

A to-many relation is made random access by making the GetAtGenerate property for the relation to True. This causes a new accessor to be generated:

```
       F* getRole(int i) const;
```

### Support for Static Architectures

Static architectures are often used in hard real-time and safety-critical applications with memory constraints. Rhapsody provides support for applications without memory management and those in which non-determinism and memory fragmentation would create problems by completely avoiding the use of the general memory management (or heap) facility during execution (after initialization). This is a typical requirement of safety-critical systems.

Rhapsody can avoid the use of the general heap facility by creating special allocators, or local heaps, for designated classes. The local heap is a preallocated, continuous, bounded chunk of memory that has the capacity to hold a user-defined number of objects. Allocation of local heaps is done via a safe and simple algorithm. Use of local heaps is particularly important for events and triggered operations.

Rhapsody applications implicitly and explicitly result in dynamic memory operations in the following cases:
- **Event generation (implicit)**-Optionally resolved via local heap
- **Addition of relations**-Resolved by implementing with static arrays (dynamic containers remain dynamic)
- **Explicit creation of application objects via the new operator**-Resolved via local heap if the application indeed dynamically creates objects

You can specify whether local heaps apply to all or only some classes, triggered operations, events, and thread event queues.
**Note**: Event queues that were implemented using OMList in version 2.0 were changed to OMArray in version 2.1. Use of dynamic arrays rather than linked lists to implement event queues results in different memory and time behaviors.

### Properties for Static Memory Allocation

The following table lists some of the properties that enable you to configure static allocations for the generated code. Setting any of these properties at a level higher than an individual instance sets the default for all instances. For example, setting a class property at the component level sets the default for all class instances. In all cases, behavior is undefined if the actual number of instances exceeds the maximum declared number.

| **Property** | **Subject and Metaclass** | **Description** |
|---|---|---|
| BaseNumberOfInstances | <lang>_CG::Class CG::Event | Specifies the number of instances or events for which memory is allocated in advance. This is the maximum number of instances or events that can simultaneously coexist during both initialization and execution. |
| AdditionalNumberOfInstances | <lang>_CG::Class CG::Event | Specifies the number of instances or events for which memory is allocated when the current pool is empty. |
| ProtectStaticMemoryPool | CG::Class/Event | Determines whether to protect access to the allocated memory pool using an operating system mutex to provide thread safety. |
| MaximumPendingEvents | CG::Class | Specifies the maximum number of events that can be simultaneously pending in the event queue of the active class. |

See the *Properties Reference Guide* for detailed information about these properties.

Events generated in an interrupt handler should not rely on rescheduling and therefore should not cause the use of an operating system mutex. In other words,

ProtectStaticMemoryPool should be False. It is up to you to make sure that the memory pool is not thread-safe. The animation framework is not subject to this restriction.

The framework files include reachable code for both dynamic and static allocation. Actual usage is based on the generated code. Use of the GEN and gen macros is the same for both modes.

Implementation of fixed and bounded relations with static arrays via the ImplementWithStaticArray property (under <lang>_CG: Relation) implicitly uses static allocation apart from initialization.

### Static Memory Allocation Algorithm

Rhapsody implements static memory allocation by redefining the new and delete operators for each event and class that use local heaps. The memory allocator allocates enough memory to hold n instances of the specific element, where n is the value of the BaseNumberOfInstances property. The memory allocation is performed during system construction and uses dynamic memory. The memory allocator uses a LIFO (stack) algorithm, as follows:
- Claimed memory is popped off the top of the stack, and the top pointer is moved to point to the next item.
- Returned memory is pushed onto the top of the stack, and the top pointer is moved to point to the returned item.

The generated class—whether a class, event, or triggered operation―is instrumented to introduce additional code needed for use by the memory allocator (specifically the next pointer).

Attempts to instantiate a class whose memory pool is exhausted result in a call to the OMMemoryPoolIsEmpty ( ) operation (in which you can set a breakpoint) and in a tracer message. Failure to instantiate results in a tracer message.

### Containment by Value via Static Architecture

Rhapsody normally generates containment by reference rather than containment by value for 1-to-MAX relationships, regardless of the relationship's type (set in the diagram). However, the static architecture feature enables you achieve the effect of containment by value by defining the maximum number of class instances and event instances via the static architecture properties, and thus avoiding the use of the default, non-deterministic new ( ) operator.

### Static Memory Allocation Conditions

If the application uses static memory allocation, the checker verifies that the following conditions are met:
- The maximum number of class instances is non-zero.
- The statechart implementation is flat.
- The new and delete operators are explicitly specified for each event and class using local heaps.

Reports include limits set for the number of instances.

All properties are loaded and saved as part of the element definition in the repository.

### Limitations

The following limitations apply to static memory allocation:
- Support is not yet provided for allocation of arrays. Instances must be allocated one-by-one. This is because of the (unknown) memory overhead associated with allocation of arrays.
- The tm ( ) timeout function is not yet supported.

### Using Standard Operations

*Standard operations* are class operations that are standardized by a certain framework or programming style. Notable examples are serialization methods that are part of distribution frameworks (see "Example" on page 15-51), and copy or convert constructors. Such operations generally apply aggregate functions to class features (such as attributes, operations, and superclasses). The following sections describe how to add standard operations to the code generated for classes and events.

### Applications for Standard Operations

Standard operations can be used to do the following:
- Create event serialization methods.
- Support canonical forms of classes.
- Make a class persistent.
- Support a particular framework.

### Event Serialization

Events are normally generated in two steps, which are encapsulated within the GEN macro in the Rhapsody framework:
1. An Event class is instantiated, resulting in a pointer to the event.
2. The event is queued by adding the new event pointer to the receiver's event queue.

Once the event has been instantiated and added to the event queue of the receiver, the event is ready to be "sent." The success of the send operation relies upon the assumption that the memory address space of the sender and receiver are the same. However, this is not always the case.

For example, the following are some examples of scenarios in which the sender and receiver memory address spaces are most likely different:
- The event is sent between different processes in the same host.
- The event is sent between distributed applications.
- The sender and receiver are mapped to different memory partitions.

One common way to solve this problem is to marshall the information.
*Marshalling* means to convert the event into raw data (or serialize it), send it using frameworks such as publish/subscribe, and then convert the raw data back to its original form at the receiving end. High-level solutions, such as CORBA, automatically generate the necessary code, but with low-level solutions, you must take explicit care. Standard operations enable you to specify to a fine level of detail how to marshall, and unmarshall, events and instances.

### Canonical Forms of Classes

Many style guidelines and writing conventions specify a list of operations to include in every class. Common examples are copy and convert constructors, and the assignment operator. Rhapsody enables you to define standard operations such as these for every class.

### Persistence

Making classes persistent is usually achieved by adding an operation with a predefined signature to every class. This can be done with a standard operation.

### Support for Frameworks

Many object-oriented frameworks are used by deriving subclasses from a base class and then overriding the virtual operations. For example, MFC constructs inherit from the CObject class and then override operations such as the following:

```
  virtual void Dump(CDumpContext& dc) const;
```

This is another example of something that can be done with standard operations.

You can add framework base classes using the

```
 <lang>_CG::Class::AdditionalBaseClasses property.
```

### Creating Standard Operations

Every standard operation is associated with a logical name. You define the logical name of a standard operation by overriding the Standard Operations property.

For every standard operation defined, you must specify an operation declaration and definition. This is done by adding the following two properties to the site. prp file to specify the necessary function templates:
- <LogicalName>Declaration-Specifies a template for the operation declaration
- <LogicalName>Definition-Specifies a template for the operation implementation

For example, with a logical name of myOp, you would add the following property (using the site.prp file or the COM API (VBA)):

```
   Subject CG
       Metaclass Class
           Property myOpDeclaration MultiLine " "
           Property myOpDefinition MultiLine " "
       end
```

You add all of the properties to be associated with a standard operation to the site prp file under their respective CG subject and metaclasses. All of these properties should have a type of multiLine.

### Keywords

The template can contain the following keywords:
- $Attributes-For every attribute in the class, this keyword is replaced with the contents of the template specified in the attribute's property
   CG : : Attribute : : <LogicalName>. For example,
   <lang>_CG : : Attribute : : myOp.
- $Relations―For every relation in the class, this keyword is replaced with the contents of the template specified in the relation's property
   CG : : Relation : : <LogicalName>. For example,
   <lang>_CG : : Relation : : myOp.
- $Base (visibility) -For every super class/event, this keyword is replaced with the content of the template specified in the super class/event property CG: : Class/Event : : <logicalName>Base. For example,
   CG::Class::myOpBase.
- $Arguments-For every event in the class, this keyword is replaced with the contents of the template specified in the event's property
   CG : : Event : : <LogicalName>Args. For example,
   <lang>_CG::Event::myOpArgs.

When expanding the properties, you can use the following keywords:
- $Name-Specifies the model name of the class (attribute, relation, operation, or base class), depending on the context of the keyword. If applicable, $Type is the type associated with this model element.
- $ImplName-Specifies the name of the (generated) code. This is usually the data member associated with this model element.
   This is useful in RiC, where the logical name can be replaced in the generated code to a more complex name.

In addition, you can create custom keywords that relate to any property in the context using the convention $<property name>. For example, if you added a property CG: : Class: : Foo, you can relate to the property content in
CG: : Class : :myOpDefinition by $Foo.

Note that this feature, combined with stereotype-based code generation, lets a power user define a set of standard operations, associate them to stereotypes, and lets other members of the team apply the stereotypes-getting the standard operations without worry over the properties.

### Example

If you need to implement a serialization of events for all the events in a certain package, the package's CG: : Event: : StandardOperations property will contain "serialize, unserialize". If the serialization is done by placing the event argument values inside an strstream, the corresponding properties and their values are as follows:

```
   CG : : Event : : SerializeDeclaration
      public:
           strstream & serializer(strstream & theStrStream)
           const;
 CG::Event::SerializeDefinition
   strstream & $Name : : serialize(strstream & theStrStream) {
       $Base
       $Arguments
       return theStrStream;
   }
```

**CG : : Event : : SerializeArgs**

```
   theStrStream << $Name;
```

**CG : : Event : : SerializeBase**

```
   $Name : : serialize(theStrStream);
```

If you defined an event voiceAlarm with two arguments, severity and priority, and VoiceAlarm inherits from Alarm, the resulting code for the template would be as follows:

```
   strstream & VoiceAlarm::serialize(strstream &
   theStrStream) {
       Alarm::serialize(theStrStream);
       theStrStream << severity;
       theStrStream << priority;
       return theStrStream;
   }
```

The same process is done for the unserialize part.

### Providing Support for Java Initialization Blocks (RiJ)

Java initialization blocks are used to perform initializations before instantiating a class, such as loading a native library used by the class. You can use standard operations to provide a convenient entry point for this language construct, as follows:
1. Open the site. prp file and add the following property:

```
 Subject CG
   Metaclass Class
       Property StandardOperations String "InitializationBlock"
    end
 end
```

2. Open the site Java. prp file and add the following property:

```
     Subject JAVA_CG
        Metaclass Class
            Property Initialization Block Declaration MultiLine ""
        end
     end
```

3. For every class that needs an initialization block, enter the text in the class's InitializationBlockDeclaration property. For example:

```
        static {
            System.loadLibrary("MyNativeLib");
        }
```

The text will be entered below the class declaration.

## Claims

1. A computer implemented method for associating software source code (204) with a plurality of elements (405) of a model representing the software source code (202), comprising the steps of:
generating a plurality of elements (405) of a model implementable as software source code (204); generating the software source code (204) corresponding to the plurality of elements (405) of the model;
associating portions of the software source code (204) with at least one of the plurality of elements (405) of the model;
determining that at least either one of the plurality of elements (405) or at least a portion of the software source code (204) has been modified; and modifying (506) at least either one of a portion of the software source code (204) and the entire software source code (204) to correspond to the at least one or more of the plurality of elements (405) that have been modified or the at least one of the plurality of model elements (405) to correspond to the modified software source code (204) **characterized by** : regenerating from the mode (202) at least one of a portion of the software source code (204) and the entire software source code (204) in accordance with code generation rules (614), so that the software source code (204) is synchronised to the modified model (202).

2. The method according to claim 1, further comprising the step of displaying at least either a portion of the software source code that has been modified or at least one of the plurality of elements (405) of the model that has been modified.

3. The method according to claim 1, wherein at least a portion of at least one of the plurality of model elements (405) is displayed in a first display region of a browser (206), and at least a portion of the modified software source code is displayed in a second display region of the browser (208).

4. The method according to claim 3, wherein particular line numbers of the software source code are associated with at least one of the plurality of model elements (405).

5. The method according to claim 3, wherein the first and second display regions (206, 208) comprise frames.

6. The method according to claim 1, wherein particular line numbers of the software source code are associated with at least one of the plurality of model elements (405).

7. The method according to claim 1, wherein the model elements (405) are unified modeling language (UML) model elements (405).

8. The method according to claim 7, wherein the UML elements (405) comprise at least one of a class diagram, an object diagram, a use case diagram, a state diagram, a sequence diagram, an activity diagram, a collaboration diagram, a component diagram, and a deployment diagram.

9. A computer program product residing on a computer readable medium, the computer program product comprising instructions for causing a computer to perform the method according to any of claims 1 to 8.

10. A data processing system for generating documentation for software source code in a software project, comprising:
means for generating a plurality of elements (405) of a model implementable as software source code ;
means for generating software source code corresponding to the plurality of elements (405) of the model;
means for associating portions of the software source code with at least one of the plurality of elements (405) of the model;
means for determining that at least one of the plurality of elements (405) of the model has been modified; and
means for modifying at least one of a portion of the software source code and the entire software source code to correspond to one or more of the modified model elements (405)
**characterized by**
means for regenerating from the model at least one of a portion of the software source code and the entire software source code in accordance with code generation rules so that the software source code is synchronised to the modified model (405).

11. The system of claim 10 further comprising means for displaying (208) at least a portion of the software source code that has been modified.

12. A system for executing a method according to any one of claims 1 to 8, comprising:
a model-code manager (401) for locating or determining changes to at least one of an element (405) stored in a model repository (407) and a software source code associated with an element (405);
a code generator (409) to generate code corresponding to at least one of a modified element (405) and all associated elements (405) stored in the model repository (407); and
a model update generator (402) to at least one of update an existing associated element (405) and generate at least one new element (405) corresponding to modified software source code.

13. The system according to claim 12, further comprising:
an element finder (404) to locate at least a portion of software source code corresponding to a particular element (405).

14. The system according to claim 13 further comprising:
an active code view module (208) for displaying a corresponding code fragment (204; 302) of a selected element (202; 304; 405).

15. The system according to claim 14, further comprising:
an incremental model code associativity module (408) to determine if at least one element (405) has been modified since a last code update, wherein said model-code manager (401) causes the creation or update of one or more files (412, 413, 414, 415) to reflect the modification.

## Patentansprüche

1. Computerimplementiertes Verfahren zum Assoziieren von Softwarequellcode (204) mit einer Vielzahl von Elementen (405) eines Modells, repräsentierend den Softwarequellcode (202), umfassend die Schritte:
Generieren einer Vielzahl von Elementen (405) eines Modells, implementierbar als Softwarequellcode (204);
Generieren des Softwarequellcodes (204), korrespondierend zu der Vielzahl von Elementen (405) des Modells;
Assoziieren von Anteilen des Softwarequellcodes (204) mit zumindest einem der Vielzahl von Elementen (405) des Modells;
Determinieren, dass zumindest ein Beliebiges der Vielzahl von Elementen (405) oder zumindest ein Anteil des Softwarequellcodes (204) modifiziert worden ist; und
Modifizieren (506) zumindest eines Beliebigen entweder eines Anteils des Softwarequellcodes (204) und des gesamten Softwarequellcodes (204), um zu dem zumindest einen oder mehreren der Vielzahl von Elementen (405) zu korrespondieren, welche modifiziert wurden, oder
Modifizieren des zumindest einen der Vielzahl von Modellelementen (405), um zu dem modifizierten Softwarequellcode (204) zu korrespondieren, **gekennzeichnet durch**
Regenerieren aus dem Modell zumindest eines Anteils des Softwarequellcodes (204) und des gesamten Softwarequellcodes (204), gemäß Codegenerierungsregeln (614), so dass der Softwarequellcode (204) mit dem modifizierten Modell (202) synchronisiert ist.

2. Verfahren gemäß Anspruch 1, des Weiteren umfassend den Schritt des Anzeigens zumindest entweder eines Anteils des Softwarequellcodes, welcher modifiziert worden ist oder zumindest eines der Vielzahl von Elementen (405) des Modells, welches modifiziert worden ist.

3. Verfahren gemäß Anspruch 1, wobei zumindest ein Anteil zumindest eines der Vielzahl von Modellelementen (405) in einem ersten Anzeigebereich eines Browsers angezeigt wird, und zumindest ein Anteil des modifizierten Softwarequellcodes in einem zweiten Anzeigebereich des Browsers (208) angezeigt wird.

4. Verfahren gemäß Anspruch 3, wobei spezielle Zeilennummern des Softwarequellcodes mit zumindest einem der Vielzahl von Modellelementen (405) assoziiert sind.

5. Verfahren gemäß Anspruch 3, wobei die ersten und zweiten Anzeigebereiche (206, 208) Rahmen umfassen.

6. Verfahren gemäß Anspruch 1, wobei spezielle Zeilennummern des Softwarequellcodes (204) mit zumindest einem der Vielzahl von Modellelementen (405) assoziiert sind.

7. Verfahren gemäß Anspruch 1, wobei die Modellelemente (405) Unified Modelling Language (UML) Modellelemente (405) sind.

8. Verfahren gemäß Anspruch 7, wobei die UML-Elemente (405) zumindest eines aus Klassendiagramm, ein Objektdiagramm, eine usecase-Diagramm, ein Zustandsdiagramms, ein Sequenzdiagramm, ein Aktivitätsdiagramm, ein Kollaborationsdiagramm, ein Komponentendiagramm und ein Verteilungsdiagramm (Deployment diagram) umfassen.

9. Computerprogrammprodukt, angesiedelt auf einem computerlesbaren Medium, wobei das Computerprogrammprodukt Instruktionen umfasst zum Veranlassen eines Computers, das Verfahren gemäß beliebigen der Ansprüche 1 bis 8 auszuführen.

10. Datenverarbeitungssystem zum Generieren von Dokumentation für Softwarequellcode in einem Softwareprojekt, umfassend:
Mittel zum Generieren einer Vielzahl von Elementen (405) eines Modells, implementierbar als Softwarequellcode;
Mittel zum Generieren von Softwarequellcode, korrespondierend zu der Vielzahl von Elementen (405) des Modells;
Mittel zum Assoziieren von Anteilen des Softwarequellcodes mit zumindest einem der Vielzahl von Elementen (405) des Modells;
Mittel zum Determinieren, dass zumindest eines der Vielzahl von Elementen (405) des Modells modifiziert worden ist; und
Mittel zum Modifizieren zumindest eines aus einem Anteil des Softwarequellcodes und dem gesamten Softwarequellcode, um zu dem einen oder mehreren der modifizierten Modellelemente (405) zu korrespondieren, **gekennzeichnet durch**
Mittel zum Regenerieren aus dem Modell zumindest eines aus einem Anteil des Softwarequellcodes und dem gesamten Softwarequellcode gemäß Codegenerierungsregeln, so dass der Softwarequellcode mit dem modifizierten Modell (405) synchronisiert ist.

11. System gemäß Anspruch 10, des Weiteren umfassend Mittel zum Anzeigen (208) zumindest eines Anteils des Softwarequellcodes, welcher modifiziert worden ist.

12. System zum Ausführen eines Verfahrens gemäß einem der Ansprüche 1 bis 8 umfassend:
einem Modellcodemanager (401) zum Lokalisieren oder Determinieren von Änderungen an zumindest einem aus einem Element (405), gespeichert in einem Modell-Repository (407), und einem Softwarequellcode, assoziiert mit einem Element (405);
einen Codegenerator (409) zum Generieren von Code, korrespondierend zumindest einem aus einem modifizierten Element (405) und allen assoziierten Elementen (405), gespeichert in dem Modell-Repository (407); und
einen Modellaktualisierungsgenerator (402) für zumindest eines aus Aktualisierung eines bestehenden assoziierten Elements (405) und Generieren zumindest eines neuen Elements (405), korrespondierend zu dem modifizierten Softwarequellcode.

13. System gemäß Anspruch 12, des Weiteren umfassend:
einem Elementfinder (404) zum Lokalisieren zumindest eines Anteils des Softwarequellcodes, korrespondierend zu einem speziellen Element (405).

14. System gemäß Anspruch 13, des Weiteren umfassend:
ein aktives Codesichtmodul (208) zum Anzeigen eines korrespondierenden Codefragments (204, 302) eines selektierten Elements (202; 304; 405).

15. System gemäß Anspruch 14, des Weiteren umfassend:
ein inkrementelles Modellcodeassoziativitätsmodul (408) um zu bestimmen, ob zumindest ein Element (405) seit einer letzten Codeaktualisierung modifiziert worden ist, wobei der Modellcodemanager (401) die Generierung oder Aktualisierung einer oder mehrerer Dateien (412, 413, 414, 415) veranlasst, um die Modifikation zu reflektieren.

## Revendications

1. Procédé implémenté par ordinateur pour associer un code source de logiciel (204) à une pluralité d'éléments (405) d'un modèle représentant le code source de logiciel (202), comprenant les étapes consistant à :
engendrer une pluralité d'éléments (405) d'un modèle qui peut être implémenté comme un code source de logiciel (204) ; engendrer le code source de logiciel (204) correspondant à la pluralité d'éléments (405) du modèle ;
associer des parties du code source de logiciel (204) à au moins un de la pluralité des éléments (405) du modèle ;
déterminer que, au moins soit l'un de la pluralité des éléments (405), soit au moins une partie du code source de logiciel (204) a été modifié ; et
modifier (506) au moins, soit l'un d'une partie du code source de logiciel (204) et le code source de logiciel entier (204) pour correspondre à le au moins un ou plusieurs de la pluralité d'éléments (405) qui ont été modifiés, soit l'au moins un de la pluralité d'éléments de modèle (405) pour correspondre au code source de logiciel modifié (204), **caractérisé par**
engendrer à nouveau, à partir du modèle (202), au moins un d'une partie du code source de logiciel (204) et le code source de logiciel entier (204) en accord avec des règles de génération de code (614), de sorte que le code source de logiciel (204) est synchronisé avec le modèle modifié (202).

2. Procédé selon la revendication 1, comprenant en outre l'étape consistant à afficher au moins soit une partie du code source de logiciel qui a été modifié, soit au moins l'un de la pluralité d'éléments (405) du modèle qui a été modifié.

3. Procédé selon la revendication 1, dans lequel au moins une partie d'au moins un de la pluralité d'éléments de modèle (405) est affiché dans une première région d'affichage d'un navigateur (206), et au moins une partie du code source de logiciel modifié est affichée dans une deuxième région d'affichage du navigateur (208).

4. Procédé selon la revendication 3, dans lequel des numéros de ligne particuliers du code source de logiciel sont associés à au moins un de la pluralité d'éléments de modèle (405).

5. Procédé selon la revendication 3, dans lequel les première et deuxième régions d'affichage (206, 208) comprennent des cadres.

6. Procédé selon la revendication 1, dans lequel des numéros de ligne particuliers du code source de logiciel sont associés à au moins un élément parmi la pluralité d'éléments de modèle (405).

7. Procédé selon la revendication 1, dans lequel les éléments de modèle (405) sont des éléments de modèle (405) dans un langage unifié de modélisation (UML).

8. Procédé selon la revendication 7, dans lequel les éléments UML (405) comprennent au moins un parmi un diagramme de classe, un diagramme d'objet, un diagramme de cas d'utilisation, un diagramme d'état, un diagramme de séquence, un diagramme d'activité, un diagramme de collaboration, un digramme de composants, et un diagramme de déploiement.

9. Produit de programme d'ordinateur sur un support lisible par ordinateur, le produit de programme d'ordinateur comprenant des instructions pour amener un ordinateur à réaliser le procédé selon l'une quelconque des revendications 1 à 8.

10. Système de traitement de données pour générer une documentation pour un code source de logiciel dans un projet de logiciel, comprenant :
des moyens pour engendrer une pluralité d'éléments (405) d'un modèle qui peut être implémenter en tant que code source de logiciel,
des moyens pour engendrer un code source de logiciel correspondant à la pluralité d'éléments (405) du modèle,
des moyens pour associer des parties du code source de logiciel à au moins un de la pluralité d'éléments (405) du modèle,
des moyens pour déterminer qu'au moins un de la pluralité d'éléments (405) du modèle a été modifié, et
des moyens pour modifier au moins un d'une partie du code source de logiciel et le code source de logiciel entier, pour correspondre à un ou plusieurs des éléments du modèle modifié (405),
**caractérisé par**
des moyens pour engendrer à nouveau à partir du modèle au moins un d'une partie du code source de logiciel et le code source de logiciel entier conformément à des règles de génération de code, de sorte que le code source de logiciel est synchronisé avec le modèle modifié.

11. Système selon la revendication 10, comprenant, en outre, des moyens pour afficher (208) au moins une partie du code source de logiciel qui a été modifié.

12. Système pour exécuter un procédé selon l'une quelconque des revendications 1 à 8, comprenant :
un gestionnaire de code de modèle (401) pour situer ou déterminer des modifications sur au moins un d'un élément (405) mémorisé dans un référentiel de modèle (407) et un code source de logiciel associé à un élément (405)
un générateur de code (409) pour engendrer un code correspondant à au moins un d'un élément modifié (405) et tous les éléments associés (405) mémorisés dans le référentiel de modèle (407), et
un générateur de mise à jour de modèle (402) pour au moins un parmi mettre à jour d'un élément associé existant (405) et engendrer au moins un élément nouveau (405) correspondant au code source logiciel modifié.

13. Système selon la revendication 12, comprenant, en outre :
un localisateur d'éléments (404) pour localiser au moins une partie d'un code source de logiciel correspondant à un élément particulier (405).

14. Système selon la revendication 13, comprenant, en outre :
un module de visualisation de code actif (208) pour afficher un fragment de code correspondant (204 ; 302) d'un élément sélectionné (202 ; 304 ; 405).

15. Système selon la revendication 14, comprenant, en outre :
un module d'association de code de modèle incrémental (408) pour déterminer si au moins un élément (405) a été modifié depuis une dernière mise à jour de code, le gestionnaire de code de modèle (401) amenant la création ou la mise à jour d'un ou plusieurs fichiers (412, 413, 414, 415) pour refléter la modification.
